# EUROPEAN PATENT APPLICATION

(11) **EP 4 834 157 A1**
(43) Date of publication of application: **04.11.2026**
(21) Application number: 23963079.1
(22) Date of filing: 26.12.2023
(51) Int. Cl.: A24F 40/90

(54) **AEROSOL GENERATION DEVICE**

(71) Applicant: Japan Tobacco Inc., Tokyo 105-6927 (JP)
(72) Inventor: NAGAHAMA, Toru, Tokyo 130-8603 (JP); TAGAYA, Shuhei, Tokyo 130-8603 (JP)
(74) Representative: Hoffmann Eitle
(86) International application number: PCT/JP2023/046765
(87) International publication number: WO 2025/141726

(57) **Abstract**

An inhalation device (100B), constituting an example of an aerosol-generating device which is configured with a removable battery serving as a power source unit (111B) and generates an aerosol by using power from the attached battery, comprises a control unit (116B) for controlling operation of the inhalation device (100B) based on usage restriction information stored in a memory unit of the battery attached to the inhalation device (100B).

## Description

### TECHNICAL FIELD

The present disclosure relates to an aerosol-generating device.

### BACKGROUND ART

Aerosol-generating devices which generate an aerosol to which a flavor component has been added and deliver the generated aerosol to a user, for example, are conventionally known. This kind of aerosol-generating device typically generates the aerosol by heating an aerosol source by means of a heating unit, which is an electrically-resistive or inductively-heated heater, by supplying the heating unit with power.

PTL 1-5 below disclose technology relating to aerosol-generating devices of this type, which enable a user to replace a battery.

### CITATION LIST

### PATENT LITERATURE

PTL 1: CN 107373765 A
PTL 2: CN 208480616 U
PTL 3: CN 206507325 U
PTL 4: CN 204407377 U
PTL 5: CN 209609859 U

### SUMMARY OF INVENTION

### PROBLEM TO BE SOLVED BY THE INVENTION

In the field of aerosol-generating devices, it is conceivable that the user will replace the battery of the aerosol-generating device if the battery is removable, and once the battery has been replaced, it is still desirable to suitably control charging/discharging of the battery after replacement. However, this aspect has not been sufficiently investigated in the prior art and there is still room for improvement.

The present disclosure provides an aerosol-generating device configured with a removable battery, which, if the battery has been replaced, is still capable of suitably controlling charging/discharging of the battery after replacement.

### SOLUTION TO PROBLEM

One aspect of the present disclosure is:
an aerosol-generating device which is configured with a removable battery and generates an aerosol by using power from the attached battery,
the aerosol-generating device comprising a control unit for controlling operation of the aerosol-generating device based on usage restriction information stored in a memory unit of the battery attached to the aerosol-generating device.

### ADVANTAGEOUS EFFECTS OF INVENTION

The present disclosure makes it possible to provide an aerosol-generating device configured with a removable battery, which, if the battery has been replaced, is still capable of suitably controlling charging/discharging of the battery after replacement.

### BRIEF DESCRIPTION OF DRAWINGS

[Fig. 1] is a diagram showing an example of a battery rental support system 10 of the embodiment.
[Fig. 2] is a schematic diagram schematically showing a first configuration example of an inhalation device 100.
[Fig. 3] is a schematic diagram schematically showing a second configuration example of the inhalation device 100.
[Fig. 4] is a schematic diagram schematically showing a configuration example of a communication terminal 200.
[Fig. 5] is a schematic diagram schematically showing a configuration example of a store terminal 300_i.
[Fig. 6] is a schematic diagram schematically showing a configuration example of a server 400.
[Fig. 7] is a diagram showing an example of a battery compatibility information table 405a stored in a memory unit 405.
[Fig. 8] is a diagram showing an example of a store information table 405b stored in the memory unit 405.
[Fig. 9] is a sequence diagram showing an example of operation of the battery rental support system 10.
[Fig. 10] is a diagram showing an example of a rental store selection screen 1000 displayed on a UI unit 203 by a communication terminal 200 that received rental support information.
[Fig. 11] is a diagram showing an example of a rental details setting screen 1100 displayed on the UI unit 203 by the communication terminal 200 that received the rental support information.
[Fig. 12] is a flowchart showing an example of battery attachment-related processing implemented by a control unit 116 of the inhalation device 100.
[Fig. 13] is a diagram showing a first example of a method for distinguishing the type of battery 11 attached to the inhalation device 100.
[Fig. 14] is a diagram showing a second example of a method for distinguishing the type of battery 11 attached to the inhalation device 100.
[Fig. 15] is a flowchart showing an example of external power source connection-related processing implemented by the control unit 116 of the inhalation device 100.
[Fig. 16] is a flowchart showing an example of rental period notification processing implemented by the control unit 116 of the inhalation device 100.

### EMBODIMENTS OF THE INVENTION

An embodiment of the present disclosure will be described in detail below with reference to the drawings. The drawings should be viewed in the orientation of the reference signs. It should be noted that not all of the features described in the following embodiment are essential. Furthermore, two or more of the plurality of features described in the following embodiment may be combined in any way. Hereinafter, identical or similar elements may be assigned identical or similar reference signs, and descriptions thereof may be omitted or simplified as appropriate.

### [1. Battery rental support system]

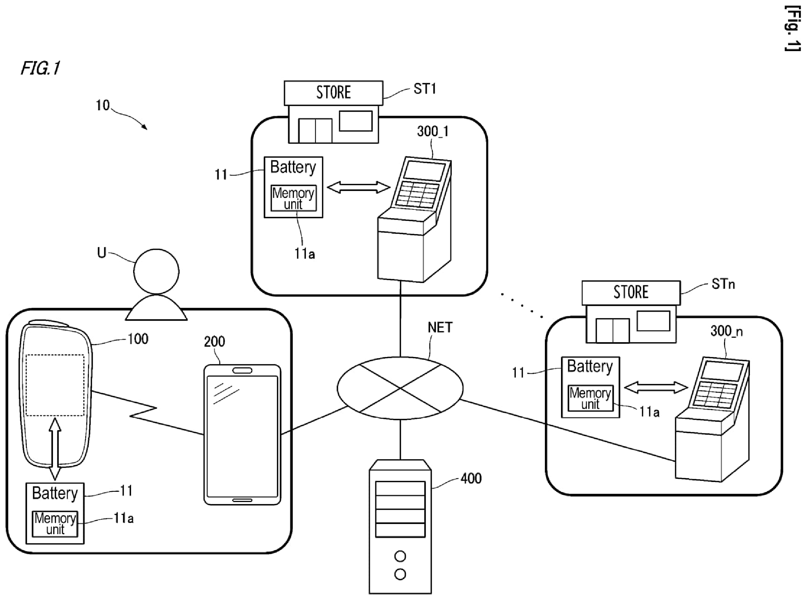

Fig. 1 is a diagram showing an example of a battery rental support system 10 of this embodiment. The battery rental support system 10 shown in fig. 1 is a system for supporting a battery rental service by means of which a battery 11 used in an inhalation device 100, constituting an example of an aerosol-generating device for generating an aerosol, is loaned to a user U of the inhalation device 100. A battery rental service such as this can be provided by a manufacturer of the inhalation device 100, for example.

The battery 11 is a rechargeable battery, chiefly a secondary battery such as a nickel-metal hydride rechargeable battery or a lithium-ion rechargeable battery. Furthermore, the battery 11 comprises a memory unit 11a configured by a non-volatile storage medium such as a flash memory, for example. The memory unit 11a can store usage restriction information which will be described later. The battery 11 may further comprise a microprocessor (also referred to below as a "battery IC") serving as a control unit for controlling overall operation within the battery 11.

As shown in fig. 1, the battery rental support system 10 comprises: a communication terminal 200 used by the user U of the inhalation device 100; store terminals 300_1-300_n (where n is a natural number of greater than 1) installed in respective stores ST1-STn which are service provision locations where batteries 11 are loaned to users U; and a server 400 capable of communicating via a network NET with the communication terminal 200 and each of the store terminals 300_1-300_n. The network NET is the Internet, a cellular communication network, or a wide area network (WAN), etc., for example.

An arbitrary store among the stores ST1-STn will also be referred to below as "store STi", and the store terminal installed at the store STi will also be referred to as "store terminal 300_i". The store STi is a convenience store, a tobacconist, or an eatery (e.g., a café), etc., for example. As another example, the store STi may be a public smoking area, etc.

The inhalation device 100 is a device for generating a substance to be inhaled by a user. The substance generated by the inhalation device 100 is described below as an aerosol, but this is not limiting, and the substance generated by the inhalation device 100 may equally be a gas.

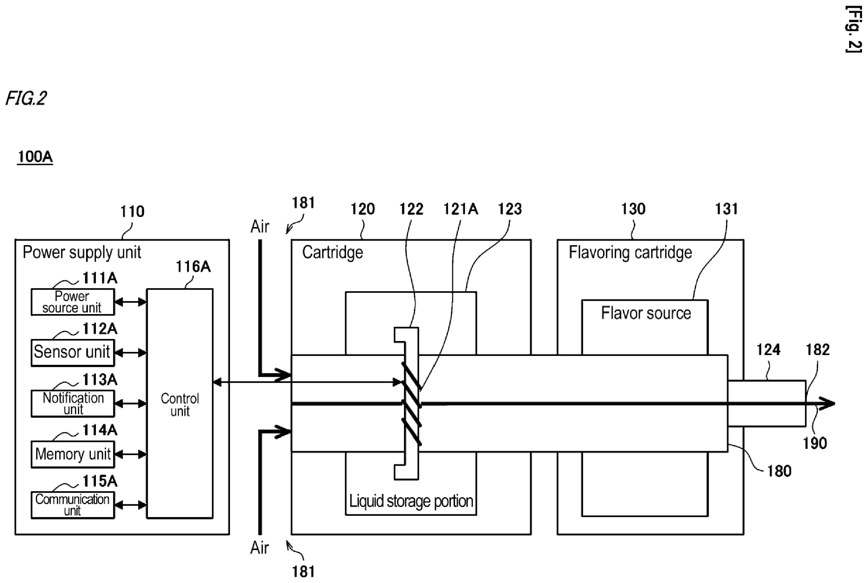

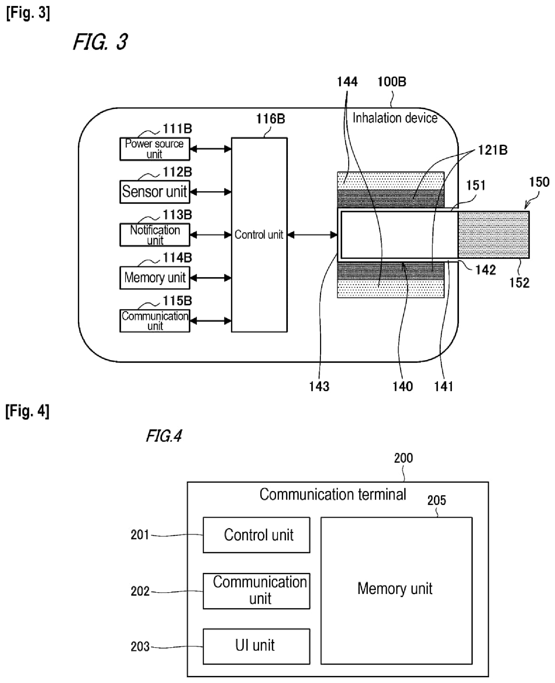

The inhalation device 100 is configured with a removable battery 11 and generates an aerosol by using power from the battery 11. The details will be described later, but the inhalation device 100 comprises, for example, a heating unit (e.g., the heating unit 121A shown in fig. 2 or the heating unit 121B shown in fig. 3) for heating an aerosol source, and heats the aerosol source by supplying the heating unit with power from the attached battery 11, to thereby generate an aerosol.

Here, there may be several types of inhalation devices 100, such as, for example, an inhalation device 100A which will be described later with the aid of fig. 2, and an inhalation device 100B which will be described later with the aid of fig. 3. The manufacturer of the inhalation device 100 prepares various types of inhalation devices 100 so that the user U can select the type of inhalation device 100 which suits their preference.

When there are various types of inhalation devices 100, each type of inhalation device 100 may consume different amounts of power or have a different size of housing, etc., so a different type of battery 11 may be compatible with each type of inhalation device 100. A system which can inhibit a user U who is making use of the battery rental system from being loaned a battery 11 of a type that is incompatible with the inhalation device 100 of the user U is therefore desirable.

The communication terminal 200 is, for example, a smartphone, a tablet terminal, or a personal computer used by the user U, or else a computer such as a wearable terminal. The inhalation device 100 of the user U and the communication terminal 200 are linked with each other by the user U performing a predetermined action on the inhalation device 100 and/or the communication terminal 200.

The communication terminal 200 communicates with each of the inhalation device 100, the store terminal 300_i, and the server 400 and can thereby transfer predetermined information (data) therebetween. For example, communication between the communication terminal 200 and the server 400 takes place via the network NET. Meanwhile, for example, Wi-Fi (registered trademark), Bluetooth (registered trademark), Bluetooth Low Energy (BLE) (registered trademark), Near-Field Communication (NFC), Low Power Wide Area (LPWA), etc. may be used for communication between the communication terminal 200 and the inhalation device 100 or the store terminal 300_i. Furthermore, communication between the communication terminal 200 and the inhalation device 100 or the store terminal 300_i may also take place via the network NET.

The store terminal 300_i is configured with removable batteries 11. The batteries 11 to be loaned at the store STi in which the store terminal 300_i is installed are attached to the store terminal 300_i. The user U can then remove a battery 11 from the store terminal 300_i to borrow that battery 11. The user U can furthermore attach a borrowed battery 11 to the store terminal 300_i to return that battery 11. A configuration example of the store terminal 300-i will be described later with the aid of fig. 4.

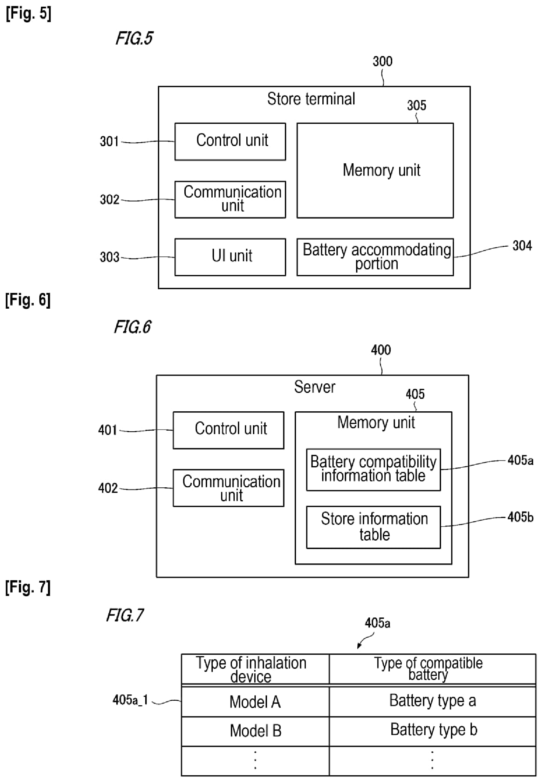

The server 400 is an example of an information processing device of the present disclosure, and is a computer managed by a service provider (e.g., the manufacturer of the inhalation device 100) providing the battery rental service. The server 400 may be a virtual server (cloud server) realized in a cloud computing service, or may be a physical server realized as a single device. A configuration example of the server 400 will be described later with the aid of fig. 5.

### [2. Configuration example of inhalation device]

### <2-1. First configuration example of inhalation device>

Fig. 2 is a schematic diagram schematically showing a first configuration example of the inhalation device 100. As shown in fig. 2, an inhalation device 100A according to this configuration example includes a power supply unit 110, a cartridge 120, and a flavoring cartridge 130. The power supply unit 110 comprises a power source unit 111A, a sensor unit 112A, a notification unit 113A, a memory unit 114A, a communication unit 115A, and a control unit 116A. The cartridge 120 includes a heating unit 121A, a liquid guiding portion 122, and a liquid storage portion 123. The flavoring cartridge 130 comprises a flavor source 131 and a mouthpiece 124. An air flow path 180 is formed in the cartridge 120 and the flavoring cartridge 130.

The power source unit 111A stores electrical power. The power source unit 111A then supplies the electrical power to each component of the inhalation device 100A in accordance with control performed by the control unit 116A. Furthermore, the power source unit 111A may be configured to be chargeable by means of power received from an external power source. The external power source is an AC adapter (AC: alternating current), a mobile charger, a PC (personal computer), or the like, for example. The power source unit 111A is realized by the battery 11 attached to the inhalation device 100A, for example.

The sensor unit 112A acquires various types of information relating to the inhalation device 100A. For example, the sensor unit 112A is configured by a pressure sensor such as a condenser microphone, a flow rate sensor or a temperature sensor, etc., and acquires values associated with inhalation by the user U.

As an example, the sensor unit 112A may include a pressure sensor (also referred to as a "puff sensor") for detecting a change in pressure (also referred to hereinafter as "internal pressure") in the inhalation device 100A caused by inhalation by the user U. As another example, the sensor unit 112A may include a flow rate sensor for detecting a flow rate caused by inhalation by the user U (hereinafter simply referred to as "flow rate"). As another example, the sensor unit 112A may include a temperature sensor (also referred to as a "puff thermistor") for detecting the temperature of the heating unit 121A or the temperature around the heating unit 121A.

The sensor unit 112A may also include an operation detector to detect operations by the user U. In other words, the sensor unit 112A may also function as an input unit that receives input of information from the user U. In this case, the sensor unit 112A may comprise an operation button, an operation switch, a motion sensor, or a Hall sensor, etc.

The notification unit 113A notifies the user U of information. The notification unit 113A may, for example, be configured by a light-emitting device that emits light, a display device that displays images, a sound output device that outputs sound, or a vibration device that vibrates, etc. Here, the light-emitting device may be realized by a light-emitting element such as an LED (Light-Emitting Diode), and a drive circuit for causing the light-emitting element to emit light, and the like. Furthermore, the display device may be a liquid crystal display or an OLED display (OLED: Organic Light-Emitting Diode). The sound output device may be a speaker, for example. The vibration device may be a vibrator comprising a motor and an eccentric weight attached to a rotary shaft of the motor, for example.

The memory unit 114A stores various types of information (e.g., programs and data) for operation of the inhalation device 100A. The memory unit 114A may be configured by a non-volatile storage medium such as a flash memory, for example.

The communication unit 115A is a communication interface capable of performing communication conforming to any wired or wireless communication standard. Examples of communication standards that may be used include standards employing Wi-Fi, Bluetooth, BLE, NFC, or LPWA, etc. For example, the communication unit 115A communicates with the communication terminal 200 by way of short-range wireless communication such as Bluetooth or NFC, in accordance with control performed by the control unit 116A.

The control unit 116A functions as an arithmetic processing device and a control device, and controls overall operation within the inhalation device 100A in accordance with programs stored in the memory unit 114A, etc. For example, the control unit 116A controls the supply of electricity from the power source unit 111A to each component (e.g., the heating unit 121A to be described later), and controls charging of the power source unit 111A (i.e., the battery 11) by means of power received from the external power source. In this embodiment, the control unit 116A further comprises a real-time clock (RTC) for timing in real-time, for example.

The control unit 116A is realized, for example, by an electronic circuit comprising an IC (Integrated Circuit) such as a Central Processing Unit (CPU) or a microprocessor (also referred to as a "Micro Controller Unit (MCU)"). Furthermore, the control unit 116A may be formed by a single IC or by two or more ICs.

The liquid storage portion 123 stores an aerosol source. The aerosol source is atomized to generate an aerosol. The aerosol source is a polyhydric alcohol such as glycerol or propylene glycol, or a liquid such as water, for example. The aerosol source may include a tobacco-derived or non-tobacco-derived flavor component. If the inhalation device 100A is a medical inhaler such as a nebulizer, the aerosol source may include a drug.

The liquid guiding portion 122 guides the aerosol source, which is a liquid stored in the liquid storage portion 123, from the liquid storage portion 123, and holds the aerosol source. The liquid guiding portion 122 is, for example, a wick formed by twisting a fibrous material such as glass fibers or a porous material such as a porous ceramic. In this case, the aerosol source stored in the liquid storage portion 123 is guided by the capillary effect of the wick.

The heating unit 121A heats the aerosol source to atomize the aerosol source, thereby generating the aerosol, for example. The heating unit 121A is formed by any material, such as a metal or polyimide, in any shape, such as coiled, film-like or blade-like. In the example shown in fig. 2, the heating unit 121A is configured as a coil obtained by winding a heating resistor such as nichrome or stainless steel, and is wrapped around the liquid guiding portion 122. When the heating unit 121A generates heat, the aerosol source held in the liquid guiding portion 122 is heated and atomized, generating the aerosol. The heating unit 121A generates heat when supplied with electricity from the power source unit 111A.

As an example, the supply of electricity from the power source unit 111A to the heating unit 121A may be implemented when the sensor unit 112A has detected that the user has started inhaling and/or that predetermined information has been input. The supply of electricity to the heating unit 121A may then be stopped when the sensor unit 112A has detected that the user U has finished inhaling and/or that predetermined information has been input.

Moreover, the heating unit 121A may be configured to generate an aerosol by means of vibration or induction heating. When the aerosol is generated by means of vibration, the inhalation device 100A comprises a vibration unit as the heating unit 121A. For example, the vibration unit is configured by a plate-shaped member comprising a piezoelectric ceramic functioning as an ultrasonic vibrator. When the vibration unit vibrates, the aerosol source which has been guided to a surface of the vibration unit by means of the liquid guiding portion 122 is then atomized by means of ultrasound generated as the vibration unit vibrates, thereby generating the aerosol.

Furthermore, when the aerosol is generated by means of induction heating, the inhalation device 100A comprises a susceptor and an electromagnetic induction source serving as the heating unit 121A. The susceptor is made of an electrically conductive material, such as a metal, and generates heat by means of electromagnetic induction. Furthermore, the susceptor is disposed adjacent to the liquid guiding portion 122. As an example, the susceptor is formed by a metallic conducting wire and is wound around the liquid guiding portion 122. The electromagnetic induction source causes the susceptor to generate heat by electromagnetic induction. The electromagnetic induction source is formed by a coiled conducting wire, for example, and generates a magnetic field when supplied with an AC current from the power source unit 111A. When a magnetic field is generated, eddy currents are generated in the susceptor, and Joule heat is generated. The aerosol source held in the liquid guiding portion 122 is then heated by this Joule heat and atomized, generating the aerosol.

The flavor source 131 is a component for imparting a flavor component to the aerosol. The flavor source 131 includes tobacco-derived or non-tobacco-derived flavor components. The flavor source 131 may be, for example, a tobacco-derived substance such as cut tobacco, or a processed product obtained by molding a tobacco raw material into a granular form, a sheet form, or a powder form. Furthermore, the flavor source 131 may also include non-tobacco-derived materials made from plants other than tobacco (e.g., mint and herbs, etc.). As one example, the flavor source 131 may contain a flavoring component such as menthol. Furthermore, the flavor source 131 may be a stick-type member. When the inhalation device 100A is a medical inhaler, the flavor source 131 may contain a drug to be inhaled by a patient. It should be noted that the aerosol source 131 is not limited to a solid, and may equally be a liquid containing a flavor component, such as a polyhydric alcohol such as glycerol or propylene glycol, or water, for example. Furthermore, the flavor source 131 may be arranged inside a container such as a capsule.

The air flow path 180 is a flow path for air to be inhaled by the user U. The air flow path 180 has a tubular structure with an air inflow hole 181, which is an inlet for air into the air flow path 180, and an air outflow hole 182, which is an outlet for air from the air flow path 180, at the two ends thereof. Part way along the air flow path 180, the liquid guiding portion 122 is disposed on the upstream side (the side closer to the air inflow hole 181), and the flavor source 131 is disposed on the downstream side (the side closer to the air outflow hole 182). Air flowing in through the air inflow hole 181 as the user U inhales is mixed with the aerosol generated by the heating unit 121A and transported through the flavor source 131 to the air outflow hole 182, as shown by the arrow 190. When the mixed fluid of aerosol and air passes through the flavor source 131, the flavor component contained in the flavor source 131 is added to the aerosol.

The mouthpiece 124 is a member that is held in the mouth of the user U during inhalation. The air outflow hole 182 is disposed in the mouthpiece 124. The user U holds the mouthpiece 124 in their mouth and inhales, making it possible to draw the mixed fluid of aerosol and air into the oral cavity.

A configuration example of the inhalation device 100A has been described above. The inhalation device 100A is, of course, not limited to the configuration described above, and various configurations, such as those illustrated below by way of example, may be adopted.

As an example, the inhalation device 100A need not include the flavoring cartridge 130. In this case, the mouthpiece 124 is provided on the cartridge 120.

As another example, the inhalation device 100A may further include a flavor source heating unit (not depicted) for heating the flavor source 131. The flavor source heating unit is configured in a film shape and is disposed so as to cover the outer periphery of the flavor source 131, for example. The flavor source heating unit then generates heat when supplied with power from the power source unit 111A, heating the flavor source 131 from the outer periphery thereof. It should be noted that the flavor source heating unit may also be configured with a blade-like form, piercing the flavor source 131 to heat the flavor source 131 from the inside, for example. Furthermore, the flavor source heating unit may be configured to heat the flavor source 131 by means of vibration or induction heating. Providing such a flavor source heating unit makes it possible to increase the temperature of the flavor source 131 and to increase the amount of flavor component added to the aerosol, as compared with a case in which the flavor source heating unit is not provided.

Furthermore, as another example, the inhalation device 100A may include a plurality of types of aerosol sources. A plurality of types of aerosol generated from the plurality of types of aerosol sources may be mixed within the air flow path 180 to cause a chemical reaction, thereby generating yet more other types of aerosol.

Furthermore, the means for atomizing the aerosol source is not limited to heating by the heating unit 121A. For example, the means for atomizing the aerosol source may be vibration atomization or induction heating.

### <2-2. Second configuration example of inhalation device>

Fig. 3 is a schematic diagram schematically showing a second configuration example of the inhalation device 100. As shown in fig. 3, an inhalation device 100B according to this configuration example comprises a power source unit 111B, a sensor unit 112B, a notification unit 113B, a memory unit 114B, a communication unit 115B, a control unit 116B, a heating unit 121B, an accommodating portion 140, and a heat insulating portion 144.

The power source unit 111B, sensor unit 112B, notification unit 113B, memory unit 114B, communication unit 115B, and control unit 116B are each substantially the same as the corresponding component included in the inhalation device 100A described above.

The accommodating portion 140 has an internal space 141, and holds a stick-type substrate 150 while accommodating a portion of the stick-type substrate 150 in the internal space 141. The accommodating portion 140 has an opening 142 allowing the internal space 141 to communicate with the outside, and accommodates the stick-type substrate 150 which has been inserted into the internal space 141 from the opening 142. For example, the accommodating portion 140 is a cylindrical body comprising the opening 142 and a bottom portion 143 serving as a bottom surface, and defines a columnar internal space 141. An air flow path for supplying air to the internal space 141 is connected to the accommodating portion 140. An air inflow hole, which is an inlet for air into the air flow path, is disposed in a side surface of the inhalation device 100, for example. An air outflow hole, which is an outlet for air from the air flow path to the internal space 141, is disposed in the bottom portion 143, for example.

The stick-type substrate 150 comprises a substrate portion 151 and a mouthpiece portion 152. The substrate portion 151 contains an aerosol source. The aerosol source includes a tobacco-derived or non-tobacco-derived flavor component. If the inhalation device 100B is a medical inhaler such as a nebulizer, the aerosol source may include a drug. The aerosol source may, for example, be a liquid such as water or a polyhydric alcohol, for example glycerol or propylene glycol, containing the tobacco-derived or non-tobacco-derived flavor component, or may be a solid including the tobacco-derived or non-tobacco-derived flavor component. In a state in which the stick-type substrate 150 is held in the accommodating portion 140, at least part of the substrate portion 151 is accommodated in the internal space 141, and at least part of the mouthpiece portion 152 protrudes from the opening 142. Then, when the user U holds the mouthpiece portion 152 protruding from the opening 142 in their mouth and inhales, air flows into the internal space 141 via the air flow path which is not depicted, and reaches the inside of the mouth of the user U together with the aerosol generated from the substrate portion 151.

In the example shown in fig. 3, the heating unit 121B is configured as a film heater obtained by laying out an electrically conductive track formed by a heating resistor having a correlation between electrical resistance and temperature, and is arranged to cover the outer periphery of the accommodating portion 140. Then, when the heating unit 121B generates heat, the substrate portion 151 of the stick-type substrate 150 is heated from the outer periphery, generating the aerosol. It should be noted that a heating resistor the same as that of the heating unit 121A described above may be used as the heating resistor of the heating unit 121B.

The heat insulating portion 144 prevents heat transfer from the heating unit 121B to other components. For example, the heat insulating portion 144 is configured from a vacuum heat insulating material or an aerogel heat insulating material, or the like.

A configuration example of the inhalation device 100B has been described above. The inhalation device 100B is, of course, not limited to the configuration described above, and various configurations, such as those illustrated below by way of example, may be adopted.

As one example, the heating unit 121B may be configured with a blade-like form and may be arranged so as to protrude into the internal space 141 from the bottom portion 143 of the accommodating portion 140. In that case, the blade-like heating unit 121B is inserted into the substrate portion 151 of the stick-type substrate 150 and heats the substrate portion 151 of the stick-type substrate 150 from the inside. As another example, the heating unit 121B may be arranged so as to cover the bottom portion 143 of the accommodating portion 140. Furthermore, the heating unit 121B may be configured from a combination of two or more from among a first heating unit covering the outer circumference of the accommodating portion 140, a blade-like second heating unit, and a third heating unit covering the bottom portion 143 of the accommodating portion 140.

As another example, the accommodating portion 140 may include an opening and closing mechanism such as a hinge for opening and closing part of an outer casing that forms the internal space 141. Then, by opening and closing the outer casing, the accommodating portion 140 may accommodate and clamp the stick-type substrate 150 that has been inserted into the internal space 141. In this case, the heating unit 121B may be provided on the clamping part of the accommodating portion 140, and may heat the stick-type substrate 150 while pressing same.

Furthermore, the means for atomizing the aerosol source is not limited to heating by the heating unit 121B. For example, the means for atomizing the aerosol source may be induction heating. In that case, the inhalation device 100B comprises at least an electromagnetic induction source such as a coil for generating a magnetic field, instead of the heating unit 121B. A susceptor which generates heat by means of induction heating may be provided in the inhalation device 100B, or may be contained in the stick-type substrate 150.

Furthermore, the inhalation device 100B may additionally include the heating unit 121A, the liquid guiding portion 122, the liquid storage portion 123, and the air flow path 180 according to the first configuration example, and the air flow path 180 may supply air to the internal space 141. In this case, the mixed fluid of the aerosol generated by the heating unit 121A and air flows into the internal space 141 and is further mixed with the aerosol generated by the heating unit 121B, and reaches the oral cavity of the user U.

Note that, hereinafter, the inhalation device 100A and the inhalation device 100B described above will also be referred to, without distinction, as the "inhalation device 100". Similarly, the power source unit 111A and the power source unit 111B may be referred to as the "power source unit 111", the sensor unit 112A and the sensor unit 112B may be referred to as the "sensor unit 112", the notification unit 113A and the notification unit 113B may be referred to as the "notification unit 113", the memory unit 114A and the memory unit 114B may be referred to as the "memory unit 114", the communication unit 115A and the communication unit 115B may be referred to as the "communication unit 115", the control unit 116A and the control unit 116B may be referred to as the "control unit 116", and the heating unit 121A and the heating unit 121B may be referred to as the "heating unit 121".

### [3. Configuration example of communication terminal]

Fig. 4 is a schematic diagram schematically showing a configuration example of the communication terminal 200. As shown in fig. 4, the communication terminal 200 comprises, for example, a control unit 201, a communication unit 202, a UI (user interface) unit 203, and a memory unit 205.

The control unit 201 functions as an arithmetic processing device and a control device, controlling overall operation of the communication terminal 200 in accordance with various programs. The control unit 201 is realized by an electronic circuit including a CPU, etc., for example.

The communication unit 202 is a communication interface capable of performing communication conforming to any wired or wireless communication standard in accordance with control performed by the control unit 201. Examples of communication standards that may be used include standards employing the Internet, cellular communication, Wi-Fi, Bluetooth, BLE, NFC, or LPWA, etc.

For example, the communication unit 202 communicates with the server 400 via the network NET using the Internet or cellular communication, etc., in accordance with control performed by the control unit 201. Furthermore, the communication unit 202 communicates with the inhalation device 100 or the store terminal 300_i by way of short-range wireless communication such as Bluetooth or NFC, in accordance with control performed by the control unit 201.

The UI unit 203 comprises an input device for accepting input of information from the user U, and an output device for outputting (e.g., presenting) various types of information to the user U. The input device of the UI unit 203 outputs accepted information (in other words input information) to the control unit 201. The output device of the UI unit 203 outputs various types of information in accordance with control performed by the control unit 201. In this embodiment, it is assumed that the UI unit 203 is configured by a touch panel combining a pointing device with a display device (e.g., a liquid crystal display or an organic EL display) for displaying images, but this is not limiting. For example, the UI unit 203 may be provided with a separate display device and input device. Furthermore, the UI unit 203 may further include a sound output device that outputs sound, or a vibration device that vibrates, etc.

The memory unit 205 stores various types of information (e.g., programs and data) for operation of the communication terminal 200, and this information is provided in such a way that it can be referenced by the control unit 201. The memory unit 205 is configured by a non-volatile storage medium such as a flash memory, for example. Furthermore, the memory unit 205 may further comprise a random access memory (RAM) which is used as a working area when the CPU, etc. realizing the control unit 201 performs various types of processing.

### [4. Configuration example of store terminal]

Fig. 5 is a schematic diagram schematically showing a configuration example of the store terminal 300_i. As shown in fig. 5, the store terminal 300_i comprises, for example, a control unit 301, a communication unit 302, a UI unit 303, a battery accommodating portion 304, and a memory unit 305.

The control unit 301 functions as an arithmetic processing device and a control device, controlling overall operation of the store terminal 300_i in accordance with various programs. The control unit 301 is realized by an electronic circuit including a CPU, etc., for example.

The communication unit 302 is a communication interface capable of performing communication conforming to any wired or wireless communication standard in accordance with control performed by the control unit 301. Examples of communication standards that may be used include standards employing the Internet, cellular communication, Wi-Fi, Bluetooth, BLE, NFC, or LPWA, etc.

For example, the communication unit 302 communicates with the server 400 via the network NET using the Internet or cellular communication, etc., in accordance with control performed by the control unit 301. Furthermore, the communication unit 302 communicates with the communication terminal 200 by way of short-range wireless communication such as Bluetooth or NFC, in accordance with control performed by the control unit 301.

The UI unit 303 comprises an input device for accepting input of information from a user (e.g., the user U), and an output device for outputting various types of information to the user. The input device of the UI unit 303 outputs accepted information (in other words input information) to the control unit 301. The output device of the UI unit 303 outputs various types of information in accordance with control performed by the control unit 301. For example, the UI unit 303 may also be configured by a touch panel in the same way as the UI unit 203. Furthermore, the UI unit 303 may be provided with a separate display device and input device.

The battery accommodating portion 304 is configured to be capable of accommodating a plurality of batteries 11 and to be capable of accommodating each of the batteries 11 independently. As an example, the battery accommodating portion 304 in this embodiment has a plurality of accommodating spaces, each of which can accommodate one battery 11, for example. Each accommodating space is provided with a door having a locking mechanism which operates in accordance with control by the control unit 301. When the door of one accommodating space is unlocked by the control unit 301, the user U can then open the door to retrieve the battery 11 accommodated in that one accommodating space (i.e., borrow that battery 11). Meanwhile, when the door of the accommodating space is locked, it is difficult for the user used to retrieve the battery 11 accommodated in that accommodating space.

Furthermore, each accommodating space is provided with a terminal which is electrically connected to the battery 11 accommodated in that accommodating space. The store terminal 300_i can supply power to (i.e., charge) the battery 11 accommodated in each accommodating space by way of this terminal, for example. By way of this terminal, the store terminal 300_i (or more specifically the control unit 301) can also communicate with the battery IC of the battery 11 accommodated in each accommodating space and thereby store predetermined information (e.g., usage restriction information which will be described later) in the memory unit 11a of the battery 11 accommodated in each accommodating space, and also acquire information stored in the memory unit 11a.

It should be noted that the store terminal 300_i and the battery accommodating portion 304 need not be integrally constructed, and they may be constructed as separate elements. In this case, the store terminal 300_i communicates with the other device comprising the battery accommodating portion 304 and may thereby charge a battery 11 accommodated in that other device, store predetermined information in the memory unit 11a of the relevant battery 11, and acquire information stored in the memory unit 11a.

The memory unit 305 stores various types of information (e.g., programs and data) for operation of the store terminal 300_i, and this information is provided in such a way that it can be referenced by the control unit 301. The memory unit 305 is configured by a non-volatile storage medium such as a flash memory, for example. Furthermore, the memory unit 305 may further comprise a RAM which is used as a working area when the CPU, etc. realizing the control unit 301 performs various types of processing.

### [5. Configuration example of server]

Fig. 6 is a schematic diagram schematically showing a configuration example of the server 400. As shown in fig. 6, the server 400 comprises, for example, a control unit 401, a communication unit 402, and a memory unit 405.

The control unit 401 functions as an arithmetic processing device and a control device, controlling overall operation of the server 400 in accordance with various programs. The control unit 401 is realized by an electronic circuit including a CPU, etc., for example.

The communication unit 402 is a communication interface capable of performing communication conforming to any wired or wireless communication standard in accordance with control performed by the control unit 401. Examples of communication standards that may be used include standards employing the Internet, cellular communication, and Wi-Fi, etc. For example, the communication unit 402 communicates with the communication terminal 200 or the store terminal 300_i via the network NET using the Internet or cellular communication, etc., in accordance with control performed by the control unit 401.

The memory unit 405 stores various types of information (e.g., programs and data) for operation of the server 400, and this information is provided in such a way that it can be referenced by the control unit 401. The memory unit 405 is configured by a non-volatile storage medium such as a hard disk or a flash memory, for example. Furthermore, the memory unit 405 may further comprise a RAM which is used as a working area when the CPU, etc. realizing the control unit 401 performs various types of processing.

In this embodiment, information such as a battery compatibility information table 405a and a store information table 405b are stored in the memory unit 405, for example. An example of the battery compatibility information table 405a and the store information table 405b will be described below.

Fig. 7 is a diagram showing an example of the battery compatibility information table 405a stored in the memory unit 405. As shown in fig. 7, the battery compatibility information table 405a contains information showing types of batteries 11 compatible with each type of inhalation device 100, for example.

For example, the battery compatibility information table 405a shown in fig. 7 includes information 405a_1 associating an inhalation device 100 (e.g., the inhalation device 100A shown in fig. 2) of the "Model A" type with a "Battery type a" battery 11. This information 405a_1 indicates that a "Battery type a" battery 11 is compatible with an inhalation device 100 of the "Model A" type.

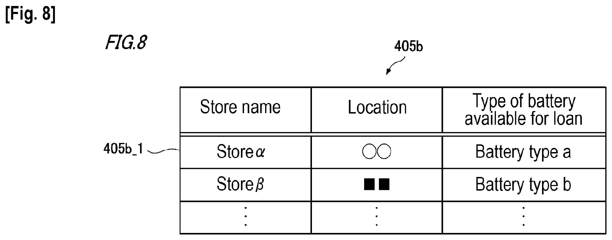

Fig. 8 is a diagram showing an example of the store information table 405b stored in the memory unit 405. As shown in fig. 8, the store information table 405b includes information for every store (e.g., the stores ST1-STn shown in fig. 1) loaning batteries 11, indicating the type of batteries 11 available for loan at that store, and the location of the store (this information will be referred to below as "location information").

For example, the store information table 405b shown in fig. 8 includes information 405b_1 associating "Store α" (e.g., the store ST1 shown in fig. 1), the location "○○", and "Battery type a" batteries 11. This information 405b_1 indicates that "Store α", which is a store loaning batteries 11, has the location "○○" and loans "Battery type a" batteries 11 (in other words, "Battery type a" batteries 11 are accommodated in the store terminal 300_i at "Store α").

### [6. Example of operation of battery rental support system 10]

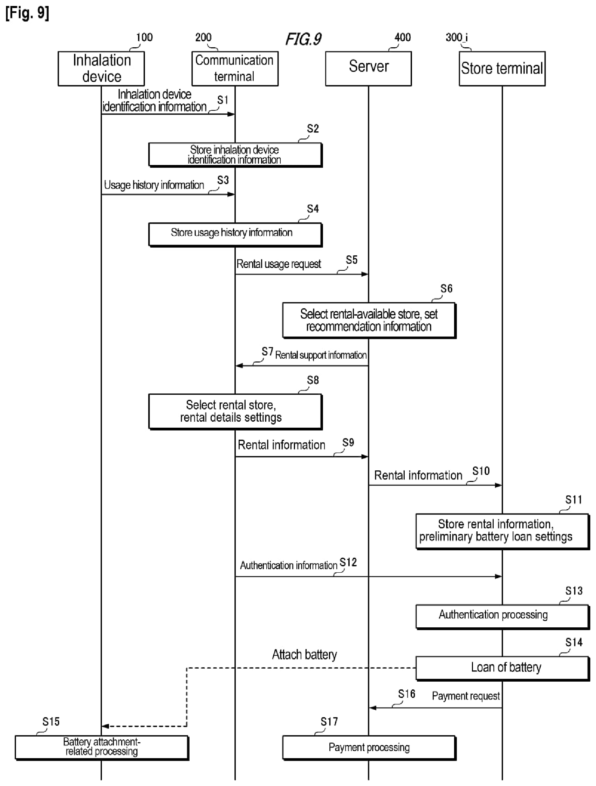

Fig. 9 is a sequence diagram showing an example of operation of the battery rental support system 10. As shown in fig. 9, the inhalation device 100 of the user U sends inhalation device identification information to the communication terminal 200 of the user U (step S1). The communication terminal 200 having received the inhalation device identification information stores this inhalation device identification information in the memory unit 205 (step S2).

Here, the inhalation device identification information includes information enabling the type of inhalation device 100 of the user U to be identified, for example the inhalation device identification information may be information enabling an individual inhalation device 100 to be identified. The timing at which the inhalation device 100 sends the inhalation device identification information may be a timing at which the inhalation device 100 and the communication terminal 200 are linked with each other by means of a predetermined action performed by the user U on the inhalation device 100 and/or the communication terminal 200, but this is not limiting, and the timing may be set in any way by the manufacturer of the inhalation device 100.

The inhalation device 100 furthermore sends usage history information to the communication terminal 200 (step S3). The communication terminal 200 having received the usage history information stores this usage history information in the memory unit 205 (step S4).

Here, the usage history information is information indicating a usage history of the inhalation device 100 of the user U, and includes, for example, information enabling identification of periods of time of smoking with the inhalation device 100. As an example, the usage history information may be information indicating start times and end times of smoking with the inhalation device 100 in a predetermined past period.

The timing at which the inhalation device 100 sends the usage history information may be a timing preset by the manufacturer of the inhalation device 100, such as 00:00 every Sunday, for example, but this is not limiting, and it may equally be another timing, such as when a predetermined action has been performed by the user U on the inhalation device 100 and/or the communication terminal 200. The inhalation device 100 may furthermore also send usage history information in conjunction with sending of the inhalation device identification information in step S1.

After accepting a predetermined action by the user U, the communication terminal 200 then sends a battery rental service usage request (also referred to below simply as a "rental usage request") to the server 400 (step S5).

Here, the rental usage request is information including the inhalation device identification information stored by the processing of step S2, in other words, the inhalation device identification information acquired from the inhalation device 100 of the user U. As an example in this embodiment, the rental usage request is assumed to include the inhalation device identification information, and additionally the usage history information stored by the processing of step S3, and location information indicating the location of the communication terminal 200 (that is, the location of the user U) at the time when the current rental usage request was sent. Moreover, the location information included in the rental usage request may be information indicating the location of a place designated by the user, instead of the location of the communication terminal 200.

A rental usage request including location information, such as the location of the user U or the location of a place designated by the user, being sent to the server 400 thus enables the server 400 to perform processing while taking account of the location of the user U or the location of the place designated by the user. Furthermore, a rental usage request including usage history information of the inhalation device 100 being sent to the server 400 enables the server 400 to perform processing while taking account of the history of usage (i.e., usage tendencies) of the inhalation device 100 by the user U.

Next, the server 400 receives the rental usage request sent from the communication terminal 200 to thereby acquire the information included in the rental usage request, and, based on this information, selects a rental-available store and sets recommendation information, which is presented to the user U (step S6).

In a detailed example of selecting a rental-available store, the server 400 first of all refers to the battery compatibility information table 405a stored in the memory unit 405 to identify the type of battery 11 compatible with the inhalation device 100 of the user U, based on the inhalation device identification information in the rental usage request that has been received. For example, if the inhalation device identification information in the received rental usage request indicates "Model A", then the server 400 refers to the battery compatibility information table 405a shown in fig. 7 to identify the battery 11 compatible with the inhalation device 100 of the user U as "Battery type a".

Next, the server 400 refers to the store information table 405b stored in the memory unit 405 and searches for a store STi loaning batteries 11 compatible with the inhalation device 100 of the user U. For example, it will be assumed that the battery 11 compatible with the inhalation device 100 of the user U has been identified as "Battery type a". In this case, the server 400 refers to the store information table 405b shown in fig. 8, and thereby finds "Store α" as a store STi loaning batteries 11 of "Battery type a".

Next, the server 400 selects, as rental-available stores, stores located within a predetermined range (e.g., within a radius of 1 [km]) from the user U (in other words, the communication terminal 200), from among stores found as stores STi loaning batteries 11 compatible with the inhalation device 100 of the user U, for example, based on the location information in the received rental usage request and location information of each store in the store information table 405b. If there are multiple stores satisfying the requirements for rental-available stores, then the server 400 selects those multiple stores as rental-available stores.

Moreover, if the location information in the received rental usage request is information indicating the location of a place designated by the user U, the server 400 selects, as rental-available stores, stores located within a predetermined range (e.g., within a radius of 1 [km]) from the place designated by the user U, from among stores found as stores STi loaning batteries 11 compatible with the inhalation device 100 of the user U.

Furthermore, in a detailed example of setting recommendation information, the server 400 first of all specifies a smoking count per day of the user U, based on the usage history information in the received rental usage request. As an example, the server 400 specifies, from the usage history information, the smoking count with the inhalation device 100 each day within the last week, and specifies the average value thereof as the smoking count per day of the user U.

Next, the server 400 deduces a charging count per day, based on the smoking count per day of the user U. For example, it will be assumed that the battery 11 in the inhalation device 100 is empty when the smoking count reaches 20 times from a state of full charge of the battery 11. The smoking count per day of the user U is then assumed to be 20 times. In this case, the user U will be able to smoke that number of times per day if the battery 11 is charged once per day. Accordingly, in this case, the server 400 deduces that the charging count per day is "once".

Meanwhile, the smoking count per day of the user U is assumed to be 40 times. In this case, the user U will not be able to smoke that number of times per day unless the battery 11 is charged twice per day. Accordingly, in this case, the server 400 deduces that the charging count per day is "twice".

The server 400 having selected rental-available stores and set recommendation information in this way sends rental support information including the information indicating rental-available stores and the recommendation information to the communication terminal 200 of the user U (that is, to the sender of the rental usage request), whereby the user U is presented with this rental support information (step S7).

Furthermore, the rental support information may also include information indicating the type of battery 11 compatible with the inhalation device 100 of the user U identified by the processing of step S6. In this way, the communication terminal 200 is able to present the user U with information indicating the type of battery 11 compatible with the inhalation device 100 of the user U. Presenting the user U with the type of battery 11 compatible with the inhalation device 100 of the user U enables the user U to ascertain the type of battery 11 compatible with their own inhalation device 100, therefore making it possible to inhibit a situation arising where the user U mistakenly borrows a battery 11 of another type.

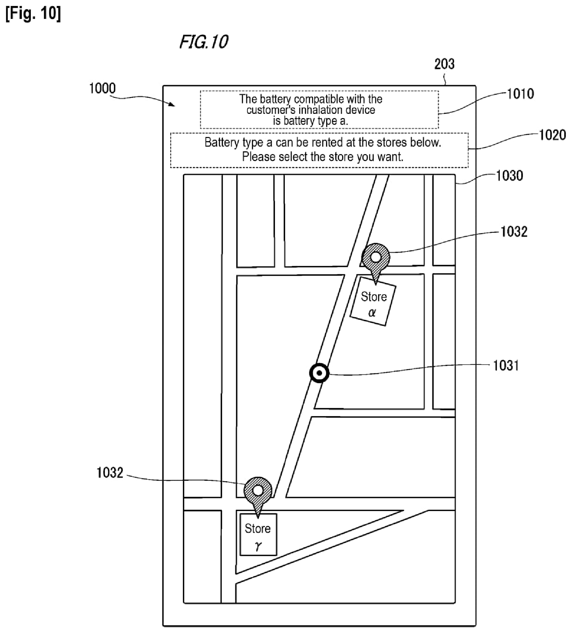

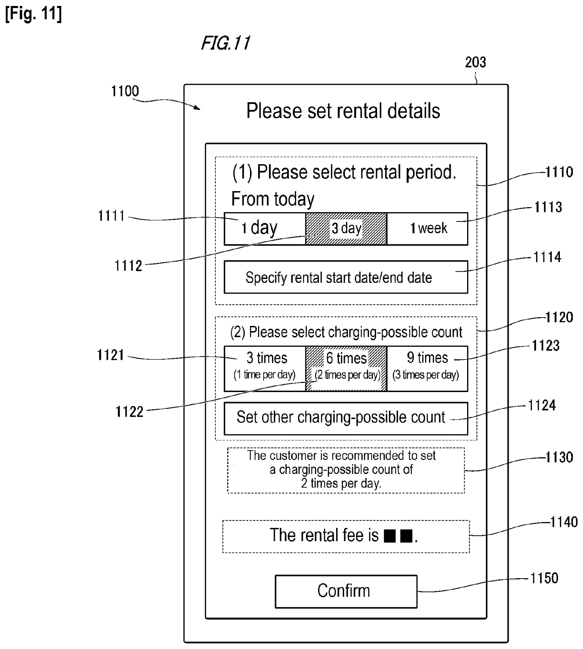

As an example in this embodiment, the communication terminal 200 having received the rental support information causes the UI unit 203 to display a rental store selection screen 1000 (to be described later with the aid of fig. 10) and a rental details setting screen 1100 (to be described later with the aid of fig. 11), for example, whereby the user U is presented with the information indicating rental-available stores, recommendation information, and information indicating the type of battery 11 compatible with the inhalation device 100 of the user U.

For example, the communication terminal 200 then accepts, via the rental store selection screen 1000 and the rental details setting screen 1100, selection of the store STi where the user U wishes to borrow a battery 11 (this will also be referred to below as the "rental store"), and settings of details for rental of the battery 11 by the user U (step S8). As an example in this embodiment, the communication terminal 200 accepts, by means of the processing of step S8, a rental store selection result for the user U, a rental period of the battery 11 for the user U, and a charging-possible count of the battery 11 for the user U.

The communication terminal 200 then sends the rental information relating to rental of the battery 11 by the user U to the server 400 (step S9). The rental information may be information obtained as a result of the processing of step S8, for example. As an example in this embodiment, the rental information includes information indicating the rental store, the rental period of the battery 11 for the user U, and the charging-possible count of the battery 11 for the user U. Here, the information indicating the rental period includes at least information indicating the end time of the rental period. In this embodiment, the rental information is assumed to also include communication terminal identification information enabling identification of the individual communication terminal 200 of the user U.

The server 400 having received the rental information specifies the store STi which will be the rental store based on the rental information, and sends the rental information to the store terminal 300_i of the relevant store STi (step S10). As a result, the server 400 is able to notify the store terminal 300_i installed in the store STi, which is the rental store, of the rental period and charging-possible count of the battery 11 for the user U, and the communication terminal identification information of the communication terminal 200 of the user U.

The store terminal 300_i having received the rental information stores this rental information in the memory unit 305 and also performs preliminary loan settings for one of the batteries 11 accommodated in the battery accommodating portion 304 (step S11). In the processing of step S11, the store terminal 300_i causes said one battery 11 to store the information based on the rental information, and charges said one battery 11, as required.

As an example in this embodiment, by means of the processing of step S11, the store terminal 300_i causes the memory unit 11a in said one battery 11 to store usage restriction information based on the rental information. Here, the usage restriction information may be information indicating the rental period and the charging-possible count of the battery 11 for the user U. Causing the memory unit 11a of the battery 11 to store such usage restriction information enables the inhalation device 100 of the user U to which this battery 11 is attached to perform control that takes account of the rental period and charging-possible count of the battery 11 for the user U.

After this, the user U proceeds to the store STi which is the rental store, where the user's own communication terminal 200 is caused to communicate with the store terminal 300_i in the store STi, and predetermined authentication information is sent from the communication terminal 200 to the store terminal 300_i (step S12). The store terminal 300_i having received the authentication information then performs authentication processing (step S13).

Here, the authentication information may be information including the communication terminal identification information, for example. If the authentication is deemed successful here, with the communication terminal identification information included in the rental information stored in the memory unit 305 matching the communication terminal identification information in the authentication information received, then the store terminal 300_i loans the battery 11 (step S14). In the processing of step S14, the store terminal 300_i unlocks the door of the accommodating space accommodating the one battery 11 for which preliminary loan settings were performed by the processing of step S11, and thereby loans that battery 11.

Furthermore, the store terminal 300_i may also present the user U with the rental information via the UI unit 303, etc., before loaning the battery 11, for example, so that the user can check the details therein (e.g., rental period and charging-possible count). The battery 11 may then be loaned after an action to the effect that the details are correct has been accepted from the user U via the UI unit 303, etc.

Meanwhile, the store terminal 300_i deems the authentication unsuccessful if the communication terminal identification information included in the rental information stored in the memory unit 305 does not match the communication terminal identification information in the authentication information received. In this case, the store terminal 300_i does not perform the processing of step S14.

The user U can only remove the battery 11 from the store terminal 300_i and attach the battery 11 to the inhalation device 100 if the processing of step S14 has been performed. The inhalation device 100 then performs battery attachment-related processing when the battery 11 is attached (step S15). The details of the battery attachment-related processing will be described later, and a description will therefore not be given here.

Furthermore, the store terminal 300_i sends a payment request to the server 400 in response to the battery 11 having been removed from the store terminal 300_i (that is, in response to the battery 11 having been loaned to the user U) (step S16).

The server 400 having received the payment request performs payment processing (step S17) for payment of a rental fee commensurate with the rental period and charging-possible count of the battery 11 for the user U on this occasion (in other words, the rental fee is charged to the user U). The rental fee is preset by the service provider (e.g., the manufacturer of the inhalation device 100) providing the battery rental service so that, for example, the rental fee is higher for a longer rental period, or the rental fee is higher for a higher charging-possible count.

As described above, the server 400 (e.g., the control unit 401) acquires the inhalation device identification information of the inhalation device 100 of the user U, identifies the type of battery 11 compatible with the inhalation device 100 of the user U based on the inhalation device identification information, searches for stores STi where batteries 11 of the type compatible with the inhalation device 100 of the user U are available for loan by referring to the store information table 405b, and presents the user U with information indicating the stores STi which have been found. By this means, the user U can be advised of stores STi where batteries 11 of the type compatible with the inhalation device 100 of the user U are available for loan, and the user U can be supported in making use of the battery rental service. Greater convenience can therefore be offered to a user U wishing to make use of the battery rental service.

Furthermore, the server 400 acquires location information of the user U, and, based on this location information, selects stores STi located within a predetermined range from the user U from among stores STi where batteries 11 of the type compatible with the inhalation device 100 of the user U are available for loan, and presents the user U with information indicating the selected stores STi. In this way, the user U can be advised of stores STi close to the user U in terms of distance where batteries 11 of the type compatible with the inhalation device 100 of the user U are available for loan, and the user U can be supported in making use of the battery rental service. Greater convenience can therefore be offered to a user U wishing to make use of the battery rental service.

As another example, the server 400 may acquire location information of a place designated by the user U, and, based on this location information, select stores STi located within a predetermined range from the place designated by the user U from among stores STi where batteries 11 of the type compatible with the inhalation device 100 of the user U are available for loan, and present the user U with information indicating the selected stores STi. In this way, the user U can be advised of stores STi close to the place requested by the user U in terms of distance where batteries 11 of the type compatible with the inhalation device 100 of the user U are available for loan, and the user U can be supported in making use of the battery rental service. Greater convenience can therefore be offered to a user U wishing to make use of the battery rental service.

Furthermore, the server 400 sends rental information relating to rental of the battery 11 by the user U to the store terminal 300_i installed in the store STi selected by the user U as the rental store, for example. By this means, the server 400 can cause the store terminal 300_i installed in the store STi selected by the user U to perform the processing involved in loaning the battery 11 to the user U.

More specifically, the rental information includes information indicating the rental period of the battery 11 for the user U, and the charging-possible count of the battery 11 for the user U, for example. As a result, the server 400 is able to notify the store terminal 300_i installed in the store STi, which is the rental store, of the rental period and charging-possible count of the battery 11 for the user U.

Having sent such rental information to the store terminal 300_i installed in the store STi selected by the user U, the server 400 then causes the memory unit 11a of one battery 11, among the batteries 11 available at the store STi, to store the abovementioned usage restriction information, via the store terminal 300_i. The inhalation device 100 of the user U to which the battery 11 storing this usage restriction information is attached is then able to perform control that takes account of the rental period and charging-possible count of the battery 11 for the user U.

Furthermore, the server 400 may present the user U with recommendation information relating to rental of the battery 11 by the user U. The user U can thus be further prompted to make use of the battery rental service.

As an example, the server 400 acquires the usage history information of the inhalation device 100 of the user U, and presents the user U with recommendation information based on this usage history information. In this way, the user U can be presented with recommendation information that takes account of usage tendencies of the user U of the inhalation device 100, which can further prompt use of the battery rental service by the user U. It should be noted that the recommendation information need not be based on the usage history information, and it may be, for example, information preset by the service provider (e.g., the manufacturer of the inhalation device 100) providing the battery rental service, or similar.

Furthermore, when a battery 11 has been loaned to a user U, the server 400 may perform payment processing for this loan. In this way, the user U can be automatically charged for the cost associated with the loan of the battery 11 to the user U. It should be noted that when the payment is processed, the server 400 should send information indicating a transaction for the predetermined amount (rental fee) to a server or the like of the card company for the user U's preregistered credit card, for example.

As an example, when a battery 11 has been loaned to a user U, the server 400 processes a payment amount commensurate with the rental period and/or charging-possible count of the battery 11 for the user U, as payment for this loan. In this way, the user U can be automatically charged a suitable price (rental fee) that takes account of the rental period and/or charging-possible count of the battery 11 for the user U.

Furthermore, the communication terminal 200 acquires inhalation device identification information from the inhalation device 100 of the user U, sends this inhalation device identification information to the server 400, and receives, from the server 400, information indicating stores STi found by the server 400 where batteries 11 of the type compatible with the inhalation device 100 of the user U are available for loan, based on the inhalation device identification information, and presents the user U with the received information indicating the stores STi. By this means, the user U can be advised of stores STi where batteries 11 of the type compatible with the inhalation device 100 of the user U are available for loan, and the user U can be supported in making use of the battery rental service. Greater convenience can therefore be offered to a user U wishing to make use of the battery rental service.

### [7. Example of rental store selection screen]

Fig. 10 is a diagram showing an example of the rental store selection screen 1000 displayed on the UI unit 203 by the communication terminal 200 that received the rental support information.

As shown in fig. 10, the rental store selection screen 1000 includes, for example: a message 1010 indicating the type of battery 11 compatible with the inhalation device 100 of the user U; a message 1020 prompting selection of a rental store; and a map image 1030 representing a map of a predetermined range.

In the example shown in fig. 10, the message: "The battery compatible with the customer's inhalation device is battery type a." is displayed as the message 1010 indicating the type of battery 11 compatible with the inhalation device 100 of the user U. This is because the type of battery 11 compatible with the inhalation device 100 of the user U was identified as "Battery type a" by the processing of step S6 shown in fig. 9.

Furthermore, in the example shown in fig. 10, the map image 1030 represents a map within a predetermined range from the user U (in other words, the communication terminal 200). A current location icon 1031 is then displayed at a point on the map image 1030 corresponding to the location of the user U.

Furthermore, a rental-available store icon 1032 is displayed at a point on the map image 1030 corresponding to the location of each rental-available store. By this means, rental-available stores are highlighted on the map image 1030 so that the user U can easily and intuitively ascertain the location of each rental-available store. The user U can then select a rental store while taking account of the location relationship between the location of the user U indicated by the current location icon 1031, and the location of each rental-available store indicated by the rental-available store icons 1032.

In the example shown in fig. 10, "Store α" and "Store γ" are highlighted by the rental-available store icons 1032 as rental-available stores. In this case, the user U can select "Store α" as the rental shop by tapping the rental-available store icon 1032 corresponding to "Store α", for example.

### [8. Example of rental details setting screen]

Fig. 11 is a diagram showing an example of the rental details setting screen 1100 displayed on the UI unit 203 by the communication terminal 200 that received the rental support information. The rental details setting screen 1100 is displayed as a result of either of the rental-available stores on the rental store selection screen 1000 shown in fig. 10 being selected as the rental store, for example.

As shown in fig. 11, the rental details setting screen 1100 includes, for example: a rental period setting field 1110 used for setting the rental period; a charging-possible count setting field 1120 used for setting the charging-possible count; and a confirm button 1150 for confirming the rental period and charging-possible count which were set by using the rental period setting field 1110 and the charging-possible count setting field 1120.

In the example shown in fig. 11, a "1 day" button 1111, a "3 days" button 1112, a "1 week" button 1113, and a rental start date/end date input button 1114 are provided in the rental period setting field 1110.

In this case, the user U can, for example, set a rental period of "1 day from today" by tapping the "1 day" button 1111. In this case, for example, the end time of the rental period (also referred to below as the "rental end time") will be 23:59:59 on the following day. Furthermore, the user U can set a rental period of "3 days from today" by tapping the "3 days" button 1112. In this case, for example, the rental end time will be 23:59:59 on the third day after the current day.

In the example shown in fig. 11, the "3 days" button 1112 has been tapped (that is, selected), so that button is highlighted in a different color from the other buttons to show that it has been selected.

Furthermore, the user U can input any dates as the rental start date and rental end date by tapping the rental start date/end date input button 1114 in the rental period setting field 1110, allowing the desired rental period to be set. In this case, for example, the rental end time is 23:59:59 on the rental end date input.

In the example shown in fig. 11, a "1 time per day" button 1121, a "2 times per day" button 1122, and a "3 times per day" button 1123 are provided in the charging-possible count setting field 1120. These buttons each display a charging-possible count corresponding to the button selected in the rental period setting field 1110, for example.

More specifically, in the example shown in fig. 11, the "3 days" button 1112 has been selected in the rental period setting field 1110, so the charging-possible counts displayed are "3 times" for the "1 time per day" button 1121, "6 times" for the "2 times per day" button 1122, and "9 times" for the "3 times per day" button 1123.

In this case, the user U can set the charging-possible count at "3 times" by tapping the "1 time per day" button 1121, for example. Furthermore, the user U can set the charging-possible count at "6 times" by tapping the "2 times per day" button 1122.

In the example shown in fig. 11, the "2 times per day" button 1122 has been tapped (that is, selected), so that button is highlighted in a different color from the other buttons to show that it has been selected.

Furthermore, a charging-possible count input button 1124 is further provided in the charging-possible count setting field 1120, for example. The user U can input any number of times as the charging-possible count by tapping the charging-possible count input button 1124, for example, allowing the desired charging-possible count to be set.

Furthermore, a recommendation 1130 based on the recommendation information included in the rental support information is also displayed on the rental details setting screen 1100, for example. More specifically, in the example shown in fig. 11, the message: "The customer is recommended to set a charging-possible count of 2 times per day." is displayed as the recommendation 1130. This is because a charging count per day of "2 times" was deduced for the user U by the processing of step S6 shown in fig. 9. By presenting the user U with this kind of recommendation 1130 adapted to tendencies of the user U in using the inhalation device 100, a charging-possible count adapted to the user U's own usage tendencies can be easily set, offering greater convenience for the user U.

When the user U taps the confirm button 1150 on the rental details setting screen 1100, rental information including information indicating the rental period and charging-possible count which were set using the rental period setting field 1110 and the charging-possible count setting field 1120 is sent to the server 400 from the communication terminal 200 (see step S9 in fig. 9).

A rental fee display field 1140 may further be provided on the rental details setting screen 1100, as shown in fig. 11. In this case, the rental fee display field 1140 displays a rental fee commensurate with the rental period and charging-possible count which were set using the rental period setting field 1110 and the charging-possible count setting field 1120, for example. By providing this kind of rental fee display field 1140, the user U can immediately ascertain the rental fee, offering greater convenience for the user U.

### [9. Example of operation of inhalation device]

An example of operation of the inhalation device 100 will be described next.

### <9-1. Battery attachment-related processing>

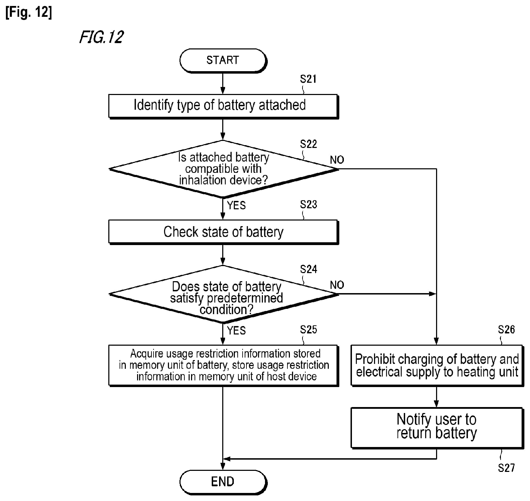

Fig. 12 is a flowchart showing an example of battery attachment-related processing implemented by the control unit 116 of the inhalation device 100. The trigger serving as a condition for the control unit 116 to perform the battery attachment-related processing may be the battery 11 being attached to the inhalation device 100, for example. In other words, the control unit 116 performs the battery attachment-related processing in response to attachment of the battery 11 to the inhalation device 100 having been detected, for example.

As shown in fig. 12, in the battery attachment-related processing, the control unit 116 first of all distinguishes the type of battery 11 attached to the inhalation device 100 (step S21). A specific example of the method for distinguishing the type of attached battery 11 will be described later and a description will therefore not be given here.

Next, the control unit 116 determines whether or not the attached battery 11 is compatible with the inhalation device 100, based on the result of the distinction obtained by the processing of step S21 (step S22). For example, information indicating the type of battery 11 compatible with the host device is prestored in the memory unit 114 of the inhalation device 100. In the processing of step S22, the control unit 116 determines whether or not the attached battery 11 is compatible with the inhalation device 100 by referring to the information stored in the memory unit 114.

If the control unit 116 determines that the attached battery 11 is compatible with the inhalation device 100 (step S22: YES), the control unit 116 then checks the state of the attached battery 11 (step S23) and determines on the basis of the checking result whether or not the state of the battery 11 satisfies a predetermined condition (step S24).

As an example, the control unit 116 checks the remaining capacity (e.g., SOC (state of charge)) of the battery 11 in the processing of step S23, and determines whether or not the remaining capacity of the battery 11 is equal to or greater than a predetermined value in the processing of step S24. In this way, if the user U has, for some reason, been loaned a battery 11 with a low remaining capacity, the processing of step S27, etc. described below can be implemented, prompting the user U to take suitable action.

As another example, the control unit 116 may check the state of health (SOH) of the battery 11 in the processing of step S23, and may determine whether or not the state of health of the battery 11 is equal to or greater than a predetermined value in the processing of step S24. In this way, if the user U has, for some reason, been loaned a battery 11 with a low state of health, the processing of step S27, etc. described below can be implemented, prompting the user U to take suitable action.

If the control unit 116 determines that the state of the battery 11 satisfies the predetermined condition (step S24: YES), the control unit 116 acquires the usage restriction information stored in the memory unit 11a of the attached battery 11, causes the memory unit 114 of the inhalation device 100 to store this usage restriction information (step S25), and terminates the battery attachment-related processing. If the control unit 116 is able to access the memory unit 11a of the battery 11 directly, the control unit 116 can acquire the usage restriction information by directly accessing the memory unit 11a in the processing of step S25. As another example, the control unit 116 may acquire the usage restriction information stored in the memory unit 11a of the battery 11 via another IC (e.g., the battery IC) able to access the memory unit 11a.

Furthermore, if the control unit 116 determines that the attached battery 11 is incompatible with the inhalation device 100 (step S22: NO), the control unit 116 prohibits charging of the battery 11 by the inhalation device 100 and electrical supply from the battery 11 to the heating unit 121 (in other words, aerosol generation by the inhalation device 100) (step S26).

The control unit 116 then notifies the user U, via the notification unit 113 of the inhalation device 100, to remove and return the attached battery 11 (step S27), and terminates the battery attachment-related processing. As an example, the control unit 116 notifies the user U to return the battery 11 by causing the light-emitting device included in the notification unit 113 to emit light in a predetermined light-emission mode (e.g., flashing red). As another example, the control unit 116 may notify the user U to return the battery 11 by causing the display device included in the notification unit 113 to display a predetermined message (e.g., a message saying: "There is a problem with the battery. Remove and return immediately").

Furthermore, if the control unit 116 determines that the state of the attached battery 11 does not satisfy the predetermined condition, in other words, for example, if it is determined that the remaining capacity or state of health of the battery 11 is less than a threshold (step S24: NO), the control unit 116 performs the abovementioned processing of step S26 and step S27, and terminates the battery attachment-related processing.

As described above, when the battery 11 has been attached to the inhalation device 100, for example, the control unit 116 acquires the usage restriction information stored in the memory unit 11a of that battery 11. This enables operation of the inhalation device 100 to be controlled thereafter on the basis of the usage restriction information acquired from the battery 11 attached to the inhalation device 100. Accordingly, the inhalation device 100 is configured with a removable battery 11, and if the battery 11 has been replaced, charging/discharging of the battery 11 in the inhalation device 100 after replacement can still be suitably controlled.

Furthermore, when the battery 11 has been attached to the inhalation device 100, for example, the control unit 116 may determine whether or not the battery 11 is compatible with the inhalation device 100, and if the battery 11 is judged to be incompatible with the inhalation device 100, the control unit 116 may provide a predetermined notification via the notification unit 113. By this means, if the user U has, for some reason, been loaned a battery 11 which is incompatible with the inhalation device 100, the user U is prompted to take suitable action.

As an example, if the battery 11 attached to the inhalation device 100 is incompatible with the inhalation device 100, the control unit 116 provides a notification prompting return of the battery 11. By this means, if the user U has, for some reason, been loaned a battery 11 which is incompatible with the inhalation device 100, the user U is prompted to return the battery 11.

Furthermore, when the battery 11 has been attached to the inhalation device 100, for example, the control unit 116 may determine whether or not the remaining capacity of the battery 11 is equal to or greater than a predetermined value, and if the remaining capacity of the battery 11 is judged to be less than the predetermined value, the control unit 116 may provide a predetermined notification via the notification unit 113. In this way, if the user U has, for some reason, been loaned a battery 11 with a low remaining capacity, the user U is prompted to take suitable action.

As an example, if the remaining capacity of the battery 11 attached to the inhalation device 100 is less than the predetermined value, the control unit 116 provides a notification prompting return of the battery 11. In this way, if the user U has, for some reason, been loaned a battery 11 with a low remaining capacity, the user U is prompted to return the battery 11. Similarly, if the state of health of the battery 11 attached to the inhalation device 100 is less than the predetermined value, the control unit 116 provides a notification prompting return of the battery 11. In this way, if the user U has, for some reason, been loaned a battery 11 with a low state of health, the user U is prompted to return the battery 11.

Furthermore, if the battery 11 has been returned because, for example, the battery 11 attached to the inhalation device 100 is incompatible with the inhalation device 100, or the state of the battery 11 attached to the inhalation device 100 does not satisfy a predetermined condition, then the control unit 116 may perform processing to invalidate the payment processing carried out when the battery 11 was loaned. As an example, in this case, the control unit 116 may send a payment invalidation request, to invalidate the payment processing carried out when the battery 11 was loaned, from the inhalation device 100 to the server 400, via the communication terminal 200 or the store terminal 300_i.

Furthermore, in this embodiment, if the battery 11 attached to the inhalation device 100 is incompatible with the inhalation device 100, then charging of the battery 11 by the inhalation device 100 and electrical supply from the battery 11 to the heating unit 121 are prohibited. This inhibits charging/discharging of incompatible batteries 11 in the inhalation device 100, leading to better safety.

In addition, the control unit 116 may not only acquire the usage restriction information stored in the memory unit 11a of the battery 11 attached to the inhalation device 100, the control unit 116 may also cause the memory unit 11a to store predetermined information.

More specifically, the control unit 116 may cause the memory unit 11a of the battery 11 attached to the inhalation device 100 to store information indicating the usage history of the battery 11 in the inhalation device 100, for example. As an example, in this case, information indicating the number of times that the battery 11 attached to the inhalation device 100 has been charged/discharged in the inhalation device 100 may be stored as the information indicating the usage history. In this way, when a battery 11 has been returned, the store terminal 300 may refer to the information stored in the memory unit 11a of the battery 11, and if a cumulative charging or discharging count of the battery 11 has reached a predetermined number of times, processing can be performed to ensure that that particular battery 11 is not subsequently loaned out.

That is to say, the control unit 116 may cause the memory unit 11a of the battery 11 to store information indicating the usage history of the battery 11 in the inhalation device 100 so that another computer able to reference the memory unit 11a can ascertain the usage history of the battery 11 in the inhalation device 100, enabling processing based on this usage history to be performed.

### <9-2. First example of method for distinguishing type of attached battery>

A method for distinguishing the type of battery 11 attached to the inhalation device 100 will be described next. A first example and a second example of the method for distinguishing the type of attached battery 11 will be described in specific terms below, but there is no limitation to these methods, and other methods may equally be used to distinguish the type of attached battery 11.

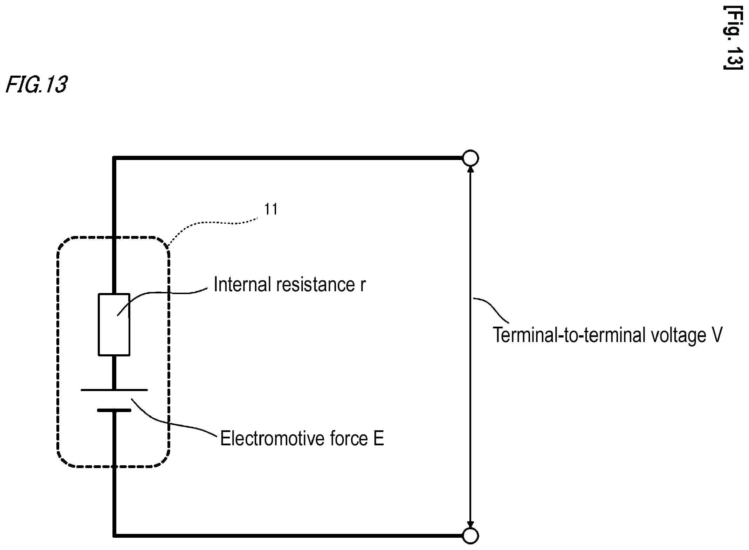

Fig. 13 is a diagram showing a first example of a method for distinguishing the type of battery 11 attached to the inhalation device 100. As shown in fig. 13, the battery 11 generates an electromotive force E [V] and has an internal resistance r [Ω]. The internal resistance r [Ω] may vary according to the type of battery 11. The type of battery 11 attached to the inhalation device 100 can therefore be distinguished by acquiring the value of the internal resistance r [Ω] of said battery 11.

In this example, a terminal-to-terminal voltage and a current flowing between terminals of the battery 11 attached to the inhalation device 100 are therefore measured by means of the sensor unit 112, etc., the internal resistance r [Ω] is deduced on the basis of the measured terminal-to-terminal voltage value and current value, and the type of battery 11 is distinguished on the basis of the deduced internal resistance r [Ω].

To describe this more specifically, in fig. 13, assuming the terminal-to-terminal voltage of the battery 11 is V [V] and the current flowing between the terminals of the battery 11 is I [A], the following equation (1) holds: $E \left[V\right] = r \left[Ω\right] \cdot I \left[A\right] + V \left[V\right]$ (1)

By rearranging equation (1), the following equation (2) is obtained. $V \left[V\right] = E \left[V\right] - r \left[Ω\right] \cdot I \left[A\right]$ (2)

The electromotive force E [V] of the battery 11 can be acquired from the measured value of the terminal-to-terminal voltage V [V] when the value of the current I [A] is zero. That is, the electromotive force E [V] of the battery 11 can be acquired by measuring the terminal-to-terminal voltage V [V] in an open circuit. Furthermore, the value of the internal resistance r [Ω] of the battery 11 can be determined by substituting the values of the terminal-to-terminal voltage V [V] and the current I [A] acquired from measurements into equation (2). In this example, information indicating the value of the internal resistance r [Ω] for each type of battery 11 is prestored in the memory unit 114, for example. The control unit 116 then refers to the information stored in the memory unit 114, and deduces the type of battery 11 corresponding to the acquired value of the internal resistance r [Ω] as the type of battery 11 attached to the inhalation device 100.

As described above, the control unit 116 determines whether or not the battery 11 attached to the inhalation device 100 is compatible with the inhalation device 100, based on the terminal-to-terminal voltage of the battery 11. More specifically, for example, the control unit 116 determines the internal resistance r of the battery 11 attached to the inhalation device 100, based on the terminal-to-terminal voltage of the battery 11, and distinguishes the type of battery 11 based on this internal resistance r. As a result, there is no need for the inhalation device 100 to be provided with a separate component used simply to distinguish the type of battery 11, etc., enabling the type of battery 11 to be easily distinguished at a low cost.

### <9-3. Second example of method for distinguishing type of attached battery>

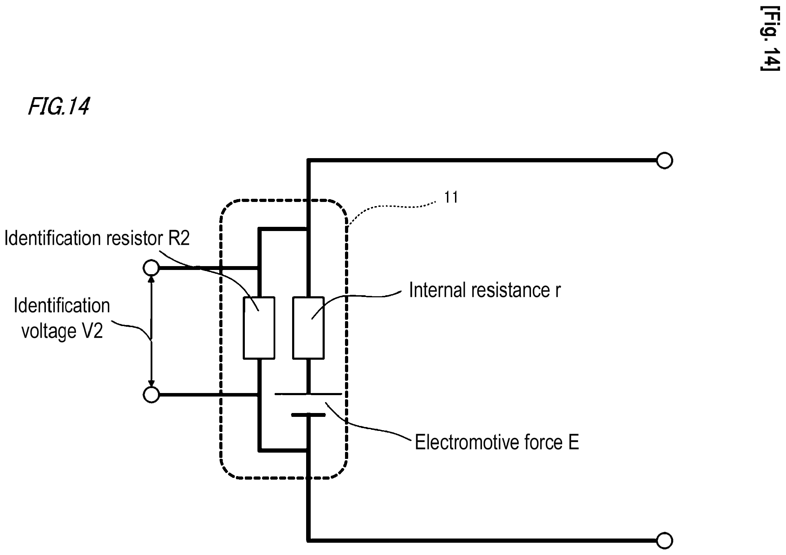

Fig. 14 is a diagram showing a second example of a method for distinguishing the type of battery 11 attached to the inhalation device 100. As shown in fig. 14, the battery 11 of this example is provided with an identification resistor R2 having an electrical resistance value commensurate with the type of battery 11.

As shown in fig. 14, the battery 11 generates an electromotive force E [V] and has an internal resistance r [Ω]. The battery 11 is further provided with the identification resistor R2 having an electrical resistance value which differs for each type of battery 11, and a potential difference at both terminals of the identification resistor R2 serves as an identification voltage V2 [V] (where identification voltage V2 < terminal-to-terminal voltage V) due to a voltage drop produced by the identification resistor R2. That is, the identification voltage V2 [V] has a different value for each type of battery 11.

In this example, the value of the identification voltage V2 [V] of the battery 11 attached to the inhalation device 100 is then measured by means of the sensor unit 112, etc., and the type of battery 11 is distinguished on the basis of the measured identification voltage V2. More specifically, in this example, information indicating the value of the identification voltage V2 [V] for each type of battery 11 is prestored in the memory unit 114, for example. The control unit 116 then refers to the information stored in the memory unit 114, and deduces the type of battery 11 corresponding to the measured value of the identification voltage V2 [V] as the type of battery 11 attached to the inhalation device 100. As a result, there is no need for the inhalation device 100 to be provided with a separate component used simply to distinguish the type of battery 11, etc., enabling the type of battery 11 to be easily distinguished at a low cost.

### <9-4. Other example of method for distinguishing type of attached battery>

As another example, the battery 11 may be provided with an identification member having an identifier for identifying the type of battery 11, for example. Examples of identifiers (in other words, identification members) that may be used include a barcode or two-dimensional code assigned separately to each type of battery 11, and an IC tag or RFID (radio frequency identification) tag to which information that enables identification of the type of battery 11 is written, or similar. In this case, the inhalation device 100 should then be provided with a sensor or similar for reading the identifier of the attached battery 11, and the control unit 116 should distinguish the type of attached battery 11 on the basis of the identifier read by means of this sensor.

As a further example, the user U may input to the communication terminal 200 information indicating the type of battery 11 attached to the inhalation device 100, the communication terminal 200 may send this information to the inhalation device 100, and the control unit 116 may distinguish the type of attached battery 11 on the basis of the information that the inhalation device 100 received from the communication terminal 200. Furthermore, the control unit 116 may also distinguish the type of attached battery 11 on the basis of information indicating the type of battery 11 input to the inhalation device 100 by the user U.

### <9-5. External power source connection-related processing>

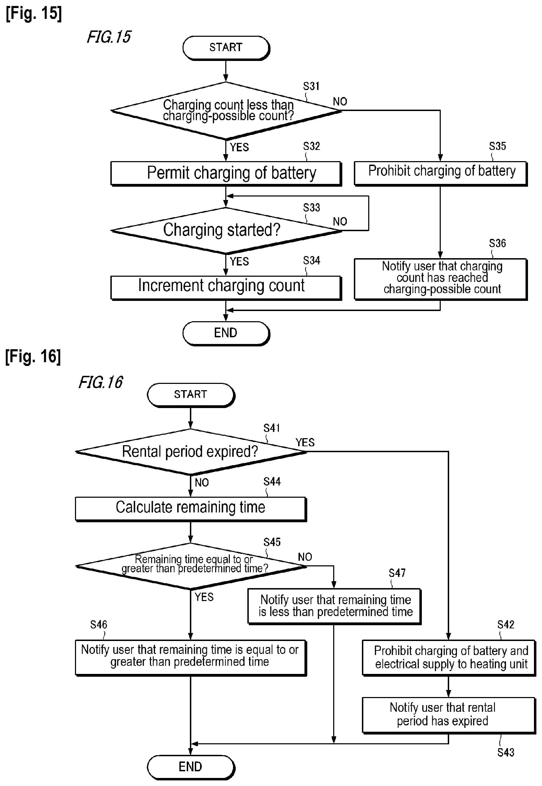

Fig. 15 is a flowchart showing an example of external power source connection-related processing implemented by the control unit 116 of the inhalation device 100. The trigger serving as a condition for the control unit 116 to perform the external power source connection-related processing may be the inhalation device 100 being connected to an external power source, for example. In other words, the control unit 116 performs the external power source connection-related processing in response to connection of the inhalation device 100 and an external power source having been detected, for example.

As shown in fig. 15, in the external power source connection-related processing, for example, the control unit 116 first of all determines whether or not a charging count, which is the number of times that the battery 11 attached to the inhalation device 100 has been charged in the inhalation device 100, is less than the charging-possible count indicated by the usage restriction information stored in the memory unit 114 (step S31).

If the charging count is judged to be less than the charging-possible count (step S31: YES), the control unit 116 permits charging of the battery 11 with power received by the inhalation device 100 from the external power source (step S32). As a result, charging of the battery 11 will be started unless the battery 11 is already in a state of full charge, for example.

Next, the control unit 116 stands by for charging of the battery 11 to be started (step S33: NO loop), and when charging of the battery 11 has started (step S33: YES), the control unit 116 increments the charging count (step S34) and terminates the external power source connection-related processing. Moreover, information indicating the charging count measured by the control unit 116 is stored in the memory unit 114, for example.

Furthermore, if the charging count is judged not to be less than the charging-possible count, that is, if the charging count is judged to have reached the charging-possible count (step S31: NO), the control unit 116 prohibits charging of the battery 11 by the inhalation device 100 (step S35). In other words, in this case the control unit 116 does not permit charging of the battery 11 by the inhalation device 100. As a result, the battery 11 is not charged in this case.

Next, the control unit 116 notifies the user U via the notification unit 113 that the charging count has reached the charging-possible count (step S36), and terminates the external power source connection-related processing. As an example, the control unit 116 notifies the user U that the charging count has reached the charging-possible count by causing the light-emitting device included in the notification unit 113 to emit light in a predetermined light-emission mode (e.g., a predetermined color of light emission). As another example, the control unit 116 may notify the user U that the charging count has reached the charging-possible count by causing the display device included in the notification unit 113 to display a predetermined message (e.g., a message saying: "Charging count has reached charging-possible count"). As a further example, the control unit 116 may notify the user that the charging count has reached the charging-possible count by causing the vibration device included in the notification unit 113 to vibrate in a predetermined manner of vibration (e.g., a predetermined vibration pattern).

As described above, the control unit 116 controls charging of the battery 11 by means of the inhalation device 100, based on the charging-possible count indicated by the usage restriction information acquired from the battery 11 attached to the inhalation device 100, and the charging count indicating the number of times that said battery 11 has been charged in the inhalation device 100, for example. As a result, charging by the inhalation device 100 of the battery 11 attached to the inhalation device 100 can be suitably controlled while taking account of the charging-possible count which is set in that battery 11.

More specifically, for example, if the charging count has not reached the charging-possible count, the control unit 116 permits charging of the battery 11 by the inhalation device 100. As a result, the user U is able to charge the battery 11 as required if the charging count of the battery 11 attached to the inhalation device 100 has not reached the charging-possible count. Meanwhile, when the charging count has reached the charging-possible count, the control unit 116 prohibits charging of the battery 11 by the inhalation device 100. As a result, it is possible to prevent the battery 11 from being charged by the inhalation device 100 beyond the charging-possible count. Accordingly, it is possible to inhibit a battery 11 for which the charging count has reached the charging-possible count from being subsequently used for a long time in the inhalation device 100, and it is possible to prompt replacement of a battery 11 for which the charging count has reached the charging-possible count. In particular, if a battery 11 has been loaned to a user U as in this embodiment, it is possible to prompt swift replacement of a battery 11 for which the charging count has reached the charging-possible count.

Furthermore, if the charging count has not reached the charging-possible count, the control unit 116 may start charging of the battery 11 using power received from an external power source in response to the inhalation device 100 having been connected to the external power source. As a result, a battery 11 for which the charging count has not reached the charging-possible count can be charged simply by connecting the inhalation device 100 to an external power source, therefore offering better convenience for the user U than when another action is also needed in addition to connection with an external power source.

Furthermore, when the charging count has reached the charging-possible count, the control unit 116 may notify the user U via the notification unit 113 that the charging count has reached the charging-possible count. In this way, when the battery 11 can no longer be charged because the charging count has reached the charging-possible count, the user U can be made aware of the reason for this, and it is possible to inhibit situations where the user U mistakes this for a fault in the inhalation device 100. Furthermore, if a battery 11 has been loaned to a user U as in this embodiment, it is possible to prompt swift replacement of a battery 11 for which the charging count has reached the charging-possible count by making the user U aware that the charging count has reached the charging-possible count.

Furthermore, in this embodiment, electrical supply from the battery 11 to the heating unit 121 is not prohibited even if the charging count has reached the charging-possible count. If the rental period has not expired and there is power remaining in the battery 11, the user U can therefore still use the inhalation device 100, for example an aerosol can still be generated by the inhalation device 100, even after the charging count has reached the charging-possible count.

### <9-6. Rental period notification processing>

Fig. 16 is a flowchart showing an example of rental period notification processing implemented by the control unit 116 of the inhalation device 100. There is no particular limitation as to the condition which triggers the control unit 116 to perform the rental period notification processing, but it may be detection of a predetermined action on the inhalation device 100, for example. Here, the predetermined action may be the action of the user U attempting to use the inhalation device 100, more specifically, it may be an action for causing the inhalation device 100 to generate an aerosol, for example.

As an example, the predetermined action may be an action which is a condition for starting heating by the heating unit 121. As another example, the predetermined action may be an action that would be expected when the stick-type substrate 150 is inserted into the accommodating portion 140, more specifically, the action of opening the cover that opens/closes the opening 142. Note that the action of opening the cover that opens/closes the opening 142 can be detected by means of a sensor (e.g., a motion sensor or a Hall sensor) provided on the cover itself, or on a case constituting the outer casing of the inhalation device 100.

As shown in fig. 16, in the rental period notification processing, for example, the control unit 116 first of all determines whether or not the rental period has expired (step S41). In the processing of step S41, for example, the control unit 116 determines that the rental period has expired if the current time obtained by the RTC or similar of the control unit 116 is a time after the rental end time of the rental period indicated by the usage restriction information stored in the memory unit 114. Meanwhile, the control unit 116 determines that the rental period has not expired if the current time is a time before the rental end time.

If the rental period is judged to have expired (step S41: YES), the control unit 116 prohibits charging of the battery 11 by the inhalation device 100 and electrical supply from the battery 11 to the heating unit 121 (step S42).

The control unit 116 then notifies the user U via the notification unit 113 that the rental period has expired (step S43), and terminates the rental period notification processing. As an example, the control unit 116 notifies the user U that the rental period has expired by causing the light-emitting device included in the notification unit 113 to emit light in a predetermined first light-emission mode (e.g., flashing red). As another example, the control unit 116 may notify the user U that the rental period has expired by causing the display device included in the notification unit 113 to display a predetermined message (e.g., a message saying: "Rental period expired").

Meanwhile, if the rental period is judged not to have expired (step S41: NO), the control unit 116 calculates the remaining time, which is the remaining period of time from the current time until the rental end time (step S44).

The control unit 116 then determines whether or not the remaining time calculated by the processing of step S44 is equal to or greater than a predetermined time (e.g., 24 hours) (step S45). This predetermined time can be freely set by the manufacturer of the inhalation device 100, for example.

If the remaining time is judged to be equal to or greater than the predetermined time (step S45: YES), the control unit 116 notifies the user via the notification unit 113 that the remaining time is equal to or greater than the predetermined time (step S46), and terminates the rental period notification processing.

As an example, the control unit 116 notifies the user U that the remaining time is equal to or greater than the predetermined time by causing the light-emitting device included in the notification unit 113 to emit light in a predetermined second light-emission mode (e.g., blue light emission). As another example, the control unit 116 may notify the user U that the remaining time is equal to or greater than the predetermined time by causing the display device included in the notification unit 113 to display a predetermined message (e.g., a message saying: "Remaining time at least 24 hours"). As a further example, the control unit 116 may notify the user that the remaining time is equal to or greater than the predetermined time by causing the vibration device included in the notification unit 113 to vibrate in a predetermined first manner of vibration, or expressly not to vibrate.

Furthermore, if the remaining time is judged to be less than the predetermined time (step S45: NO), the control unit 116 notifies the user via the notification unit 113 that the remaining time is less than the predetermined time (step S47), and terminates the rental period notification processing.

As an example, the control unit 116 notifies the user U that the remaining time is less than the predetermined time by causing the light-emitting device included in the notification unit 113 to emit light in a predetermined third light-emission mode (e.g., yellow light emission). As another example, the control unit 116 may notify the user U that the remaining time is less than the predetermined time by causing the display device included in the notification unit 113 to display a predetermined message (e.g., a message saying: "Remaining time less than 24 hours"). As a further example, the control unit 116 may notify the user that the remaining time is less than the predetermined time by causing the vibration device included in the notification unit 113 to vibrate in a predetermined second manner of vibration.

It should be noted that in the example described here, when the rental period is judged to have expired, the control unit 116 also prohibits charging of the battery 11 by the inhalation device 100, in addition to electrical supply from the battery 11 to the heating unit 121, but this is not limiting. For example, when the rental period is judged to have expired, the control unit 116 may prohibit only electrical supply from the battery 11 to the heating unit 121.

As described above, the control unit 116 controls operation of the inhalation device 100 based on whether or not the rental period indicated by the usage restriction information acquired from the battery 11 attached to the inhalation device 100 has expired, for example. As a result, operation of the inhalation device 100 can be suitably controlled while taking account of the rental period set in the battery 11 attached to the inhalation device 100.

More specifically, for example, if the rental period has not expired, the control unit 116 permits electrical supply from the battery 11 to the heating unit 121. As a result, the user U is able to inhale an aerosol by using an inhalation device 100 having an attached battery 11 for which the rental period has not expired. Meanwhile, when the rental period has expired, the control unit 116 prohibits electrical supply from the battery 11 to the heating unit 121. As a result, it is possible to inhibit an inhalation device 100 having an attached battery 11 for which the rental period has expired from being used for the purpose of aerosol inhalation. It is therefore possible to prompt swift return of a battery 11 for which the rental period has expired.

Furthermore, when the rental period has expired, the control unit 116 may also further prohibit charging of the battery 11 by the inhalation device 100. In this way, when the battery 11 has run out of power after the rental period has expired, it is difficult to use the inhalation device 100 even for purposes other than aerosol inhalation. This makes it possible to better inhibit use of an inhalation device 100 having an attached battery 11 for which the rental period has expired, making it possible to prompt swift return of a battery 11 for which the rental period has expired.

Furthermore, when the rental period has expired, the control unit 116 may notify the user U via the notification unit 113 that the rental period has expired. In this way, the user U can be made aware that the rental period has expired, making it possible to prompt swift return of a battery 11 for which the rental period has expired.

Furthermore, if the rental period has not expired, the control unit 116 may notify the user U via the notification unit 113 of the remaining time in the rental period. In this way, the user U can be made aware of the remaining time in the rental period, offering better convenience. As an example, when the remaining time is equal to or greater than a predetermined time, the control unit 116 may notify the user U that the remaining time is equal to or greater than the predetermined time by providing a first notification, and when the remaining time is less than the predetermined time, the control unit 116 may notify the user U that the remaining time is less than the predetermined time by providing a second notification different from the first notification.

Although various embodiments have been described above with reference to the drawings, it goes without saying that the present disclosure is not limited to such examples. It is obvious that a person skilled in the art will be able to conceive of a number of variant examples or modified examples within the scope disclosed in the claims, and any such variant examples or modified examples are naturally understood to fall within the technical scope of the present disclosure.

Furthermore, the control method described in the embodiments can be realized by executing a pre-prepared program (control program) on a computer. This control program is stored on a computer-readable storage medium and is run by being read out from the storage medium. The control program may also be provided in a form stored in a non-volatile (non-transitory) storage medium such as a flash memory, or may be provided over the network NET such as the Internet.

Furthermore, in the embodiments, the computer that executes the control program was the server 400 (e.g., the CPU constituting the control unit 401), but is not limited thereto. For example, the computer that executes the control program may be the store terminal 300_i. In other words, in the embodiments described above, the information processing device of the present disclosure was realized by the server 400, but this information processing device may equally be realized by the store terminal 300_i.

More specifically, for example, the user U proceeds to any store STi, where the user U's own communication terminal 200 is caused to communicate with the store terminal 300_i in the store STi, and a rental usage request is sent from the communication terminal 200 to the store terminal 300_i. The store terminal 300_i having received the rental usage request functions as the information processing device of the present disclosure, and identifies the type of battery 11 compatible with the inhalation device 100 of the user U, for example. If a battery 11 compatible with the inhalation device 100 of the user U is accommodated in the battery accommodating portion 304 of the host device, the store terminal 300_i then shows the user U via the UI unit 303, etc. that a battery 11 compatible with the inhalation device 100 of the user U is available for loan in the host device (that is, at the store STi in which the host device is installed), for example. Meanwhile, if there is no battery 11 compatible with the inhalation device 100 of the user U accommodated in the battery accommodating portion 304 of the host device, the store terminal 300_i presents the user, via the UI unit 303, etc., with information indicating a rental-available store in the vicinity of the store STi in which the host device is installed.

As another example, the user U may proceed to any store STi, where the user U's own inhalation device 100 may be caused to communicate with the store terminal 300_i in the store STi, and inhalation device identification information may be sent from the inhalation device 100 to the store terminal 300_i, for example. In this case, the store terminal 300_i having received the inhalation device identification information functions as the information processing device of the present disclosure, and identifies the type of battery 11 compatible with the inhalation device 100 of the user U, for example. If a battery 11 compatible with the inhalation device 100 of the user U is accommodated in the battery accommodating portion 304 of the host device, the store terminal 300_i then shows the user U via the UI unit 303, etc. that a battery 11 compatible with the inhalation device 100 of the user U is available for loan in the host device (that is, at the store STi in which the host device is installed), for example. Meanwhile, if there is no battery 11 compatible with the inhalation device 100 of the user U accommodated in the battery accommodating portion 304 of the host device, the store terminal 300_i presents the user, via the UI unit 303, etc., with information indicating a rental-available store in the vicinity of the store STi in which the host device is installed.

As a further example, the user U may proceed to a store STi and operate the UI unit 303 of the store terminal 300_i therein, to input the various types of information needed to borrow a battery 11 to the store terminal 300_i, and may thereby receive the loan of a battery 11 from the store terminal 300_i.

Furthermore, when the rental period of the attached battery 11 has expired, the inhalation device 100 may provide a notification to that effect to the communication terminal 200. When the rental period of the battery 11 attached to the inhalation device 100 has expired, that is, when the battery 11 has not been returned even though the rental end time has passed, the communication terminal 200 may send a payment request for a late fee to the server 400. In this case, the server 400 having received the payment request for a late fee may then charge a late fee commensurate with the period of time beyond the rental period of the battery 11 (what is known as the "overdue period"), for example.

Furthermore, the communication terminal 200 may make a request to the server 400 for an extension of the rental period or payment for such an extension, based on input by the user U. When the rental period has been extended, the communication terminal 200 may then send, to the inhalation device 100, new usage restriction information including information relating to the extended rental period, and the control unit 116 of the inhalation device 100 may thereafter control operation of the inhalation device 100 on the basis of the new usage restriction information.

The present specification, etc. sets forth at least the following features. Note that corresponding components, etc. in the embodiments described above are shown in parentheses, but are not limited thereto.

(1) An aerosol-generating device (inhalation device 100, 100A, 100B) which is configured with a removable battery (battery 11, power source unit 111, 111A, 111B) and generates an aerosol by using power from the attached battery,
the aerosol-generating device comprising a control unit (control unit 116, 116A, 116B) for controlling operation of the aerosol-generating device based on usage restriction information stored in a memory unit of the battery attached to the aerosol-generating device.

According to (1) it is possible to provide an aerosol-generating device configured with a removable battery, which, if the battery has been replaced, is still capable of suitably controlling charging/discharging of the battery after replacement.

(2) The aerosol-generating device as disclosed in (1), wherein
the aerosol-generating device is configured to be capable of charging the attached battery,
the usage restriction information includes information indicating a charging-possible count for which the battery can be charged in the aerosol-generating device, and
the control unit controls charging of the battery by the aerosol-generating device based on the charging-possible count indicated by the usage restriction information and a charging count for which the battery has been charged in the aerosol-generating device.

According to (2), charging by the aerosol-generating device of the battery attached to the aerosol-generating device can be suitably controlled while taking account of the charging-possible count which is set in that battery.

(3) The aerosol-generating device as disclosed in (2), wherein
the control unit:
permits charging of the battery by the aerosol-generating device if the charging count has not reached the charging-possible count, and
prohibits charging of the battery by the aerosol-generating device when the charging count has reached the charging-possible count.

According to (3), it is possible to prevent the battery from being charged by the aerosol-generating device beyond the charging-possible count.

(4) The aerosol-generating device as disclosed in (2) or (3), wherein
if the charging count has not reached the charging-possible count, the control unit starts charging of the battery using power received from an external power source in response to the aerosol-generating device having been connected to the external power source.

According to (4), a battery for which the charging count has not reached the charging-possible count can be charged simply by connecting the aerosol-generating device to an external power source, therefore offering better user convenience than when another action is also needed in addition to connection with an external power source.

(5) The aerosol-generating device as disclosed in any of (2) to (4), wherein
the aerosol-generating device further comprises a notification unit (notification unit 113, 113A, 113B) capable of notifying a user of information, and
when the charging count has reached the charging-possible count, the control unit notifies the user, via the notification unit, that the charging count has reached the charging-possible count.

According to (5), when the battery can no longer be charged because the charging count has reached the charging-possible count, the user can be made aware of the reason for this, and it is possible to inhibit situations where the user mistakes this for a fault in the aerosol-generating device.

(6) The aerosol-generating device as disclosed in any of (1) to (5), wherein
the aerosol-generating device has a removable battery loaned to a user by a battery rental service,
the usage restriction information includes information indicating a rental period of the battery, and
the control unit controls operation of the aerosol-generating device based on whether or not the rental period indicated by the usage restriction information has elapsed.

According to (6), operation of the aerosol-generating device can be suitably controlled while taking account of the rental period set in the battery attached to the aerosol-generating device.

(7) The aerosol-generating device as disclosed in (6), wherein
the control unit:
permits aerosol generation by the aerosol-generating device if the rental period has not expired, and
prohibits aerosol generation by the aerosol-generating device when the rental period has expired.

According to (7), it is possible to inhibit an aerosol-generating device having an attached battery 11 for which the rental period has expired from being used for the purpose of aerosol inhalation. It is therefore possible to prompt swift return of a battery for which the rental period has expired.

(8) The aerosol-generating device as disclosed in (6), wherein
the aerosol-generating device is configured to be capable of charging the attached battery, and
the control unit prohibits charging of the battery by the aerosol-generating device when the rental period has expired.

According to (8), when the battery has run out of power after the rental period has expired, it is difficult to use the aerosol-generating device even for purposes other than aerosol inhalation. This makes it possible to better inhibit use of an aerosol-generating device having an attached battery for which the rental period has expired, making it possible to prompt swift return of a battery for which the rental period has expired.

(9) The aerosol-generating device as disclosed in any of (6) to (8), wherein
the aerosol-generating device further comprises a notification unit (notification unit 113, 113A, 113B) capable of notifying a user of information, and
when the rental period has expired, the control unit notifies the user, via the notification unit, that the rental period has expired.

According to (9), the user can be made aware that the rental period has expired, making it possible to prompt swift return of a battery for which the rental period has expired.

(10) The aerosol-generating device as disclosed in (9), wherein
if the rental period has not expired, the control unit notifies the user, via the notification unit, of the remaining time in the rental period.

According to (10), the user can be made aware of the remaining time in the rental period, offering better convenience.

(11) The aerosol-generating device as disclosed in any of (1) to (10), wherein
the aerosol-generating device has a removable battery loaned to a user by a battery rental service,
the aerosol-generating device further comprises a notification unit capable of notifying a user of information, and
the control unit also:
   when the battery is attached to the aerosol-generating device, determines whether or not a remaining capacity of the battery is equal to or greater than a predetermined value, and
   if the remaining capacity is judged to be less than the predetermined value, provides a predetermined notification via the notification unit.

According to (11), if the user has, for some reason, been loaned a battery with a low remaining capacity, the user is prompted to take suitable action.

(12) The aerosol-generating device as disclosed in any of (1) to (11), wherein
the aerosol-generating device has a removable battery loaned to a user by a battery rental service,
the aerosol-generating device further comprises a notification unit capable of notifying a user of information, and
the control unit also:
   when the battery is attached to the aerosol-generating device, determines whether or not that battery is compatible with the aerosol-generating device, and
   if the battery is judged to be incompatible with the aerosol-generating device, provides a predetermined notification via the notification unit.

According to (12), if the user has, for some reason, been loaned a battery which is incompatible with the user's aerosol-generating device, the user is prompted to take suitable action.

(13) The aerosol-generating device as disclosed in (12), wherein
the control unit determines whether or not the battery attached to the aerosol-generating device is compatible with the aerosol-generating device, based on a terminal-to-terminal voltage of that battery.

According to (13), there is no need for the aerosol-generating device to be provided with a separate component used simply to distinguish the type of battery, etc., enabling the type of battery to be easily distinguished at a low cost.

(14) The aerosol-generating device as disclosed in any of (1) to (13), wherein
the control unit causes a memory unit of the battery attached to the aerosol-generating device to store information indicating a usage history of that battery in the aerosol-generating device.

According to (14), another computer capable of referencing the memory unit of the battery can ascertain the usage history of the battery in the host device, which enables processing based on that usage history to be carried out.

### REFERENCE SIGNS LIST

10 Battery rental support system
11 Battery
100, 100A, 100B Inhalation device (aerosol-generating device)
113, 113A, 113B Notification unit
116, 116A, 116B Control unit

## Claims

1. An aerosol-generating device which is configured with a removable battery and generates an aerosol by using power from the attached battery,
the aerosol-generating device comprising a control unit for controlling operation of the aerosol-generating device based on usage restriction information stored in a memory unit of the battery attached to the aerosol-generating device.

2. The aerosol-generating device as claimed in claim 1, wherein
the aerosol-generating device is configured to be capable of charging the attached battery,
the usage restriction information includes information indicating a charging-possible count for which the battery can be charged in the aerosol-generating device, and
the control unit controls charging of the battery by the aerosol-generating device based on the charging-possible count indicated by the usage restriction information and a charging count for which the battery has been charged in the aerosol-generating device.

3. The aerosol-generating device as claimed in claim 2, wherein
the control unit:
permits charging of the battery by the aerosol-generating device if the charging count has not reached the charging-possible count, and
prohibits charging of the battery by the aerosol-generating device when the charging count has reached the charging-possible count.

4. The aerosol-generating device as claimed in claim 2 or 3, wherein
if the charging count has not reached the charging-possible count, the control unit starts charging of the battery using power received from an external power source in response to the aerosol-generating device having been connected to the external power source.

5. The aerosol-generating device as claimed in any one of claims 2 to 4, wherein
the aerosol-generating device further comprises a notification unit capable of notifying a user of information, and
when the charging count has reached the charging-possible count, the control unit notifies the user, via the notification unit, that the charging count has reached the charging-possible count.

6. The aerosol-generating device as claimed in any one of claims 1 to 5, wherein
the aerosol-generating device has a removable battery loaned to a user by a battery rental service,
the usage restriction information includes information indicating a rental period of the battery, and
the control unit controls operation of the aerosol-generating device based on whether or not the rental period indicated by the usage restriction information has elapsed.

7. The aerosol-generating device as claimed in claim 6, wherein
the control unit:
permits aerosol generation by the aerosol-generating device if the rental period has not expired, and
prohibits aerosol generation by the aerosol-generating device when the rental period has expired.

8. The aerosol-generating device as claimed in claim 6, wherein
the aerosol-generating device is configured to be capable of charging the attached battery, and
the control unit prohibits charging of the battery by the aerosol-generating device when the rental period has expired.

9. The aerosol-generating device as claimed in any one of claims 6 to 8, wherein
the aerosol-generating device further comprises a notification unit capable of notifying a user of information, and
when the rental period has expired, the control unit notifies the user, via the notification unit, that the rental period has expired.

10. The aerosol-generating device as claimed in claim 9, wherein
if the rental period has not expired, the control unit notifies the user, via the notification unit, of the remaining time in the rental period.

11. The aerosol-generating device as claimed in any one of claims 1 to 10, wherein
the aerosol-generating device has a removable battery loaned to a user by a battery rental service,
the aerosol-generating device further comprises a notification unit capable of notifying a user of information, and
the control unit also:
when the battery is attached to the aerosol-generating device, determines whether or not a remaining capacity of the battery is equal to or greater than a predetermined value, and
if the remaining capacity is judged to be less than the predetermined value, provides a predetermined notification via the notification unit.

12. The aerosol-generating device as claimed in any one of claims 1 to 11, wherein
the aerosol-generating device has a removable battery loaned to a user by a battery rental service,
the aerosol-generating device further comprises a notification unit capable of notifying a user of information, and
the control unit also:
when the battery is attached to the aerosol-generating device, determines whether or not that battery is compatible with the aerosol-generating device, and
if the battery is judged to be incompatible with the aerosol-generating device, provides a predetermined notification via the notification unit.

13. The aerosol-generating device as claimed in claim 12, wherein
the control unit determines whether or not the battery attached to the aerosol-generating device is compatible with the aerosol-generating device, based on a terminal-to-terminal voltage of that battery.

14. The aerosol-generating device as claimed in any one of claims 1 to 13, wherein
the control unit causes a memory unit of the battery attached to the aerosol-generating device to store information indicating a usage history of that battery in the aerosol-generating device.
